# EUROPÄISCHE PATENTSCHRIFT

(11) **EP 3 469 037 B1**
(45) Veröffentlichungstag und Bekanntmachung des Hinweises auf die Patenterteilung: **19.02.2020**
(21) Anmeldenummer: 17727245.7
(22) Anmeldetag: 02.06.2017
(51) Int. Cl.: C09K 8/28

(54) **EMULSION, VERFAHREN ZU IHRER HERSTELLUNG UND IHRE VERWENDUNG**
EMULSION, METHOD FOR ITS MANUFACTURE AND ITS APPLICATION
ÉMULSION, SON PROCEDE DE FABRICATION ET SON UTILISATION

(30) Priorität: 10.06.2016 EP 16174049; 14.06.2016 EP 16174396
(43) Veröffentlichungstag der Anmeldung: 17.04.2019
(73) Patentinhaber: BYK-Chemie GmbH, 46483 Wesel (DE)
(72) Erfinder: NAGELSDIEK, René, 46483 Wesel (DE); BÜHNE, Sylvia, 46483 Wesel (DE); KLEIN, Agnetha, 46483 Wesel (DE); SAUERLÄNDER, Christian, 46483 Wesel (DE); LENZ, Jan, 46483 Wesel (DE)
(74) Vertreter: Altana IP Department
(86) Internationale Anmeldenummer: PCT/EP2017/063571
(87) Internationale Veröffentlichungsnummer: WO 2017/211748

(56) Entgegenhaltungen:
- DE-B- 1 191 770
- US-A- 3 041 275
- US-A1- 2012 186 880

## Beschreibung

Die vorliegende Erfindung betrifft Emulsionen, ein Verfahren zu ihrer Herstellung, ihre Verwendung sowie ein Verfahren zur Erstellung und Stabilisierung eines Bohrlochs unter Verwendung der Emulsion.

Eine Emulsion ist ein fein verteiltes Gemisch zweier Flüssigkeiten, die normalerweise nicht mischbar sind. Emulsionen sind thermodynamisch instabil. Zur Stabilisierung der feinen Verteilung werden grenzflächenaktive Substanzen eingesetzt, nämlich sog. Verträglichkeitsvermittler oder Emulgatoren (Tenside), ohne die die Emulsion rasch auseinanderfallen würde. Das Auseinanderfallen wird auch als Brechen der Emulsion bezeichnet. Die Emulgatoren verhindern mindestens für eine begrenzte Zeit das Brechen der Emulsion und stabilisieren sie. Die Zeit bis zum Brechen einer Emulsion kann zwischen wenigen Stunden und einigen Jahren betragen.

Bei der Herstellung einer Emulsion, beispielsweise aus Öl und Wasser, können kleine Öl-Tröpfchen gebildet werden, die verteilt in der wässrigen Phase vorliegen. Die Phase, die die Tröpfchen bildet, wird als innere Phase oder disperse Phase bezeichnet. Die Phase, in der die Tröpfchen schwimmen, ist die äußere Phase oder kontinuierliche Phase.

Die hier beispielhaft beschriebene Emulsion ist eine sogenannte Öl-in-Wasser-Emulsion.

Unter anderem in Abhängigkeit von den Volumenanteilen an Öl und Wasser kann auch das Wasser die disperse Phase und das Öl die kontinuierliche Phase bilden. Eine solche Emulsion ist eine Wasser-in-ÖI-Emulsion.

Die vorliegende Erfindung betrifft sowohl Öl-in-Wasser- als auch Wasser-in-ÖI-Emulsionen einschließlich sogenannter Doppelemulsionen bzw. multipler Emulsionen, d.h. zum Beispiel Wasser-in-ÖI-in-Wasser-Emulsionen (W/O/W) oder Öl-in-Wasser-in-Öl-Emulsionen (O/W/O).

Emulsionen, z.B. Wasser-in-ÖI-Emulsionen werden u.a. in Kosmetika, Wasch- und Reinigungsflüssigkeiten und Schmiermitteln eingesetzt. Ein weiteres wichtiges Einsatzgebiet sind Bohrschlämme, die bei der Erstellung von Bohrlöchern zur Förderung von Erdöl und/oder Erdgas verwendet werden; diese Bohrschlämme werden auch als Bohrflüssigkeiten bezeichnet, und wenn die kontinuierliche Phase die Ölphase ist, als ölbasierte Bohrflüssigkeiten.

Da Wasser zum einen billiger ist als Öl und zum anderen ökologisch unbedenklicher, besteht oftmals ein großes Interesse daran, möglichst viel Wasser in Öl-in-Wasser- als auch Wasser-in-ÖI-Emulsionen, z.B. in entsprechende Bohrschlämme einzubringen. Dem maximalen Gehalt an Wasser sind naturgemäß Grenzen gesetzt, da die Stabilität der Emulsion zu berücksichtigen ist; insbesondere bei Wasser-in-ÖI-Emulsionen ist dies eine mitunter schwierige Aufgabe. Durch das Einbringen von geeigneten Emulgatoren kann die Stabilität solcher Emulsionen vorteilhaft beeinflusst werden.

Bohrschlämme, auch Bohrspülungen genannt, werden bei Bohrungen durch das Bohrloch gepumpt. Sie dienen zur Stabilisierung eines Bohrlochs, dem Reinigen der Bohrlochsohle und zum Austrag des erbohrten Bodenmaterials. Weiterhin kühlen und schmieren sie das Bohrwerkzeug.

Obwohl auch Bohrfluide auf Wasserbasis bekannt sind, die viel wirtschaftlicher und ökologisch vorteilhafter sind als ölhaltige Bohrschlämme, kommen insbesondere beim Bohren sehr tiefer Löcher vorteilhaft Bohrschlämme auf Ölbasis zum Einsatz, weil sie offensichtliche Arbeitsvorteile zeigen. Typischerweise handelt es sich bei den Bohrschlämmen auf Ölbasis um Emulsionen von Wasser in Öl, welche oft 5 bis 40 Volumen-% einer wässrigen, dispergierten Salzphase enthalten. Diese Emulsionen umfassen u.a. drei Verbindungstypen:
Emulgatoren zur Sicherung der Stabilität der Emulsion, Rheologiesteuerungsmittel, z.B. organophile Tone zur Regelung der rheologischen Eigenschaften und insbesondere der Thixotropie und beschwerende Mittel wie Bariumsulfat zur Einstellung der Dichte des Fluids.

Das Patent US 3,169,113 beschreibt Wasser-in-ÖI-Emulsionen, die bei der Gewinnung von Öl und/oder Gas in speziellen Förderverfahren eingesetzt werden. Die Emulsionen enthalten neben Kohlenwasserstoffen, Wasser und einer anorganischen Säure als Emulgator ein C₉₋₁₈-Monocarbonsäuresalz eines partiellen Amids eines Polyalkylenpolyamins.

Das Patent US 5,330,662 beschreibt Bohrschlämme, die eine Mischung einer Salzlösung und eines flüssigen Kohlenwasserstoffs enthalten. Als Emulgator werden Kombinationen von Tensiden und Derivaten von Succinyl-Acylierungsmitteln oder hydroxyaromatischen Verbindungen eingesetzt. Als Derivate können Umsetzungsprodukte mit Aminen verwendet werden.

Das Patent US 4,544,756 beschreibt zwitterionische 2-Alkylimidazoline als Emulgatoren für Bohrschlämme auf Ölbasis.

Die Patentanmeldung EP 0 382 070 A1 beschreibt die Verwendung von basischen und zur Salzbildung mit Carbonsäuren befähigten Aminverbindungen ausgeprägt oleophiler Natur als Additiv in W/O-Invert-Bohröl-Schlämmen, die in der geschlossenen Ölphase Ester-Öle enthalten, zu deren Schutz gegen unerwünschte Eindickung im Gebrauch und/oder zur Verbesserung ihrer Fließfähigkeit.

Die US 3,259,572 beschreibt besonders vorteilhafte Emulgatoren für Bohrspüllösungen, die Emulsionen von Wasser und Öl darstellen, die zur Stabilisierung ebendieser Emulsionen verzweigte Polyalkylenpolyamine und deren Derivate (wie z.B. deren Alkoxylierungsprodukte) enthalten.

Die US 2012/186880 offenbart Emulsionen, die Kohlenwasserstoffe, wässrige Salzlösungen, Amidoamine und alkoxylierte Säureether beinhalten.

Es ist Aufgabe der vorliegenden Erfindung, Emulsionen mit mindestens einer wässrigen Phase und mindestens einer Ölphase anzugeben, die einen hohen Wassergehalt und zugleich eine hohe Stabilität aufweisen.

Die erfindungsgemäßen Emulsionen sollen insbesondere als Bohrschlämme, aber auch zur Herstellung von Kosmetika, Wasch- und Reinigungsmitteln, Flüssigkeiten zur Metallbearbeitung, Schmierstoffen und als Kraftstoffzusatz bei der sogenannten Wassereinspritzung bei Verbrennungskraftmaschinen geeignet sein.

Erfindungsgemäß werden die vorgenannten Aufgaben gelöst durch eine Öl-in-Wasser- oder eine Wasser-in-ÖI-Emulsion enthaltend
(A) 40 bis 97,98 Gew.-% mindestens eines Kohlenwasserstoffs,
(B) 2 bis 59,98 Gew.-% Wasser oder einer wässrigen Lösung eines Salzes, das nicht unter die folgende Definition gemäß (C) fällt und
(C) 0,02 bis 8,0 Gew.-% eines Salzes aus einem Aminoamid einer Fettsäure, das mindestens eine primäre, sekundäre oder tertiäre Aminogruppe enthält, und einer sauren Komponente der allgemeinen Formel (I) 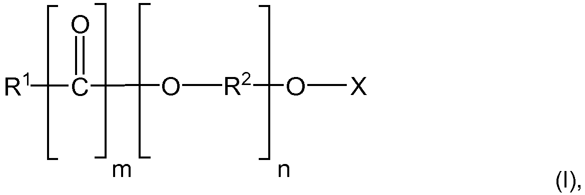 in der
   R¹ ein linearer oder verzweigter, gesättigter oder einfach oder mehrfach ungesättigter Kohlenwasserstoffrest mit 1 bis 40 C-Atomen ist,
   R² ein Alkylen- oder Arylalkylenrest mit 2 bis 20 C-Atomen ist, der in den n Wiederholungseinheiten gleich oder verschieden ist und maximal ein Ether-Sauerstoffatom enthält und
   X ein Rest ist, der mindestens eine saure Gruppe enthält, die ausgewählt ist aus carbonsauren Gruppen, phosphonsauren Gruppen und phosphorsauren Gruppen,
   m = 0 oder 1 ist,
   n = 1 bis 30 ist,
   wobei die Gewichtsanteile der Komponenten (A), (B) und (C) auf die Summe der Massen dieser Komponenten bezogen sind und diese 100 Gew.-% beträgt.

Es gelten folgende Disclaimer:
Ausgeschlossen werden Emulsionen, die (a) weniger als 40 Gew.-% oder mehr als 97,98 Gew.-% eines Kohlenwasserstoffs und/oder (b) weniger als 2 Gew.-% oder mehr als 59,98 Gew.-% Wasser oder einer wässrigen Lösung eines Salzes, das nicht unter die Definition gemäß (C) fällt und/oder (c) weniger als 0,02 oder mehr als 8 Gew.-% eines Salzes gemäß (C) enthalten, wobei die Gewichtsanteile der Komponenten (A), (B) und (C) auf die Summe der Massen dieser Komponenten bezogen sind und diese 100 Gew.-% beträgt.

Gleichwohl können die erfindungsgemäßen Emulsionen weitere Bestandteile neben den Komponenten (A), (B) und (C) enthalten, so z.B. unlösliche anorganische Partikel (beispielsweise Beschwerungsmittel oder organisch modifizierte Tonmineralien). Darüber hinaus kann innerhalb der Emulsion sowohl die Phase enthaltend den Kohlenwasserstoff (A) als auch die Phase enthaltend Wasser oder die wässrige Salzlösung (B) noch weitere darin lösliche Komponenten enthalten, wenn dies durch den Einsatzzweck bedingt vorteilhaft oder notwendig ist. So kann die Kohlenwasserstoff-Phase beispielsweise öllösliche Hilfsmittel enthalten und/oder die wässrige Phase kann beispielsweise wasserlösliche Alkohole (wie z.B. wasserlösliche Glykole) enthalten.

Die Emulgatorkomponente (C) ist also ein Salz aus einem Aminoamid einer Fettsäure als basischer Komponente und einer sauren Komponente der allgemeinen Formel (I). Im Rahmen der angegebenen Strukturen können erfindungsgemäß auch verschiedene saure und basische Komponenten zu einem Mischsalz als Emulgatorkomponente kombiniert werden.

In einer Ausführungsform der Erfindung kann es sich bei der (A), (B) und (C) enthaltenden Komposition um eine Öl-in-Wasser-Emulsion handeln.

In einer anderen Ausführungsform der Erfindung kann es sich bei der (A), (B) und (C) enthaltenden Komposition um eine Wasser-in-ÖI-Emulsion handeln.

Beide Ausführungsformen sind als Bestandteile der erfindungsgemäßen Emulsion geeignet.

Vorteilhafte Ausgestaltungen der Erfindung ergeben sich aus den abhängigen Patentansprüchen.

Vorteilhaft ist R¹ ein Alkyl- oder Alkenylrest mit 4 bis 24 C-Atomen.

Es wird bevorzugt, dass R¹ ein Alkyl- oder Alkenylrest mit 6 bis 20 C-Atomen ist und m=0 ist.

Besonders bevorzugt ist R¹ ein Alkyl- oder Alkenylrest mit 8 bis 20 C-Atomen und ganz besonders bevorzugt ein Alkylrest mit 10 bis 18 C-Atomen, wobei jeweils m=0 ist.

In einer weiterhin vorteilhaften Ausführungsform ist R¹ von Tallöl-Fettsäure abgeleitet und es gilt m=1.

Vorteilhaft ist R² ein Alkylenrest mit 2 bis 4 C-Atomen, der nur Kohlenstoff und Wasserstoff enthält.

Vorteilhafterweise soll R² maximal einen Ether-Sauerstoff enthalten.

Weitere vorteilhafte Ausgestaltungen können wie folgt beschrieben werden:
R² steht für einen Alkylen- oder Arylalkylenrest mit 2 bis 9 C-Atomen und enthält maximal einen Ether-Sauerstoff.
R² steht für einen Alkylenrest -CH₂CH₂- und/oder CH₂-CH(CH₃)-.
R² steht für einen Alkylenrest mit 2 bis 4 C Atomen und enthält nur Kohlenstoff und Wasserstoff, wobei der molare Anteil an Wiederholungseinheiten mit R² =-CH₂CH₂- (bezogen auf die Gesamtheit der n Einheiten enthaltend R²) mindestens 40%, bevorzugt mindestens 50%, besonders bevorzugt mindestens 70% beträgt.

In einer besonders vorteilhaften Ausgestaltung steht R² in allen n Wiederholungseinheiten für einen Rest -CH₂-CH₂-.

Vorteilhaft ist n eine ganze Zahl von 2 bis 14, besonders bevorzugt eine ganze Zahl von 4 bis 12.

Vorteilhaft enthält der Rest X carbonsaure Gruppen. Weiterhin wird bevorzugt, dass nur eine saure Gruppe in der Gruppe X enthalten ist.

Vorteilhaft entspricht der Rest X der allgemeinen Formel (II) 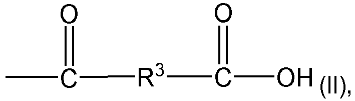 in der R³ ein gesättigter oder ungesättigter zweibindiger Kohlenwasserstoffrest ist, oder der Rest X der allgemeinen Formel (III) 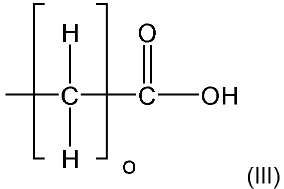 entspricht,
in der o=1 bis 6 ist.

Weitere bevorzugte Ausführungsformen können wie folgt beschrieben werden:
R³ steht für einen Alkyl- oder Alkenylrest mit 2 bis 12 C-Atomen.
R³ steht für einen Alkyl- oder Alkenylrest mit 2 bis 6 C-Atomen.
R³ steht für eine Gruppe -CH₂-CH₂- oder eine Gruppe -CH=CH- oder eine Phenylengruppe.

Vorteilhaft steht o für eine ganze Zahl 1 oder 2, besonders bevorzugt steht o für 1.

Vorteilhaft ist die saure Komponente herstellbar durch Umsetzung einer vorzugsweise monofunktionellen Fettsäure mit einem Polyalkylenglykol in einem molaren Verhältnis von 1:1 zu einem Zwischenprodukt, das im Mittel pro Molekül eine Hydroxylgruppe aufweist, und weitere Umsetzung des Zwischenprodukts mit einer Dicarbonsäure oder einem Dicarbonsäureanhydrid zu einem sauren Halbester.

Dem Fachmann ist bekannt, dass es für die technische Prozessführung vorteilhaft sein kann, wenn Umsetzungen nicht nach dem exakten theoretischen stöchiometrischen Verhältnis durchgeführt werden, sondern eine Komponente im Überschuss eingesetzt wird. Diese Verfahrensweise wird häufig eingesetzt, wenn man erreichen möchte, dass der im Unterschuss eingesetzte Reaktionspartner quantitativ umgesetzt wird und nicht als Verunreinigung im Reaktionsprodukt enthalten bleibt. So ist es beispielsweise möglich, dass die Umsetzung der Fettsäure mit dem Polyalkylenglykol in einem molaren Verhältnis stattfindet, dass nicht exakt 1,0 : 1,0 beträgt, sondern beispielsweise zwischen 0,8 : 1,0 und 1,2 : 1,0 liegt.

Methoden zur Einführung von terminalen Carbonsäure-Gruppen in hydroxyfunktionelle Verbindungen durch Umsetzung von deren OH-Gruppen mit cyclischen Carbonsäureanhydriden sind in Polymer Bull. (Berlin), 1980, 3, 347 dargestellt.

Bevorzugte Fettsäuren sind z.B. Tallöl-Fettsäure, Ölsäure, Talgfettsäuren (auch in hydrierter Form), Linolsäure, Linolensäure, Stearinsäure, Palmitinsäure, Caprinsäure, Laurinsäure, Myristinsäure, Margarinsäure, Eicosansäure und Behensäure.

Weitere beispielhaft genannte Fettsäuren sind Myristoleinsäure, cis-6-Hexadecensäure, Linolsäure, (9E,12E)-octadeca-9,12-diensäure, α-Linolensäure, Docosahexaensäure, Abietinsäure, Pimarsäure, Caprylsäure, Pelargonsäure, Undecylsäure, Laurinsäure, Tridecansäure, Pentadecylsäure, Stearinsäure, Nonadecansäure, Arachinsäure, Heneicosansäure, Tricosanäure, Lignocerinsäure, Pentacosylsäure, Cerotinsäure, Hexadecatriensäure, α-Linolensäure, Rumelensäure, Stearidonsäure, α-Parinarinsäure, β-Parinarinsäure, Eicosatriensäure, Eicosa-tetraensäure, Eicosapentaensäure, Heneicosapentaensäure, Docosapentaensäure, Docosahexaensäure, Tetracosapentaensäure, Tetracosahexaensäure (Nisinsäure), α-Elaeostearinsäure, β-Eleostearic Säure, Catalpinsäure, Punicasäure, 10E,12Z-Octadeca-9,11-diensäure, γ-Linolensäure, pinolenic Säure, α-Calendulasäuresäure, β-Calendulasäuresäure, Jacarinsäure, Eicosadiensäure, Dihomo-γ-Linolensäure, Podocarpinsäure, Arachidonsäure, Bosseopentaensäure, Docosadiensäure, Docosatetraensäure, Docosapentaensäure, Tetracosatetraenoic Säure, Tetracosapentaenoic Säure, 5-Dodecensäure, 7-Tetradecensäure, Palmitoleinsäure, Vaccensäure, Rumenic Säure, cis-13-Eicosensäure, 15-Docosensäure, 17-Tetracosensäure, Elaidinsäure, cis-11-Eicosensäure, Metsäure, Erucasäure, Nervonsäure, Myristoleinsäure.

Weiterhin ist die saure Komponente vorteilhaft herstellbar durch Alkoxylierung eines Fettalkohols und anschließende Umsetzung der OH-Gruppen des erhaltenen Zwischenprodukts mit einem Reaktionspartner ausgewählt aus der Gruppe umfassend Carboxyalkylierungsmittel, Phosphorylierungsmittel sowie Polycarbonsäuren bzw. deren Anhydride, vorzugsweise Dicarbonsäuren bzw. Dicarbonsäureanhydride.

Beispiele für Phosphorylierungsmittel sind Phosphorpentaoxid, Polyphosphorsäure oder Phosphoroxychlorid. Methoden zur Einführung von terminalen Carbonsäure-Gruppen in hydroxyfunktionelle Verbindungen durch Umsetzung von deren OH-Gruppen mit cyclischen Carbonsäureanhydriden sowie durch Carboxyalkylierung sind in Polymer Bull. (Berlin), 1980, 3, 347 dargestellt.

In einer besonders vorteilhaften Ausführungsform ist die saure Komponente herstellbar durch Carboxyalkylierung eines Alkoxylats der allgemeinen Formel (IV)

R¹-[O-R²]ₙ-OH (IV)

(mit R¹, R² und n wie zuvor beschrieben)
mit einer Säure der allgemeinen Formel (V) 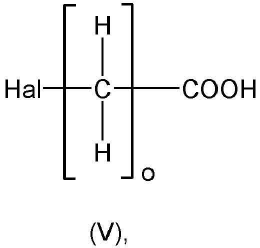 als Alkylierungsmittel oder einem Ester dieser Säure als Alkylierungsmittel, wobei im letztgenannten Fall die Ester-Schutzgruppe nach der Alkylierungsreaktion durch Esterhydrolyse wieder abgespalten wird, so dass wieder die freie Gruppe COOH gebildet wird; der Rest Hal steht für Chlor, Brom oder lod, der Parameter o ist wie zuvor beschrieben definiert.

In einer weiteren vorteilhaften Ausgestaltung ist die saure Komponente herstellbar durch Alkoxylierung eines Fettalkohols mit Ethylenoxid und/oder Propylenoxid und anschließende Umsetzung der OH-Gruppen des erhaltenen Zwischenprodukts mit einem Reaktionspartner ausgewählt aus der Gruppe umfassend Chloressigsäure, Phosphorpentaoxid, Polyphosphorsäure, Maleinsäureanhydrid und Bernsteinsäureanhydrid.

Vorteilhaft ist die basische Komponente ein Fettsäureaminoamid, welches herstellbar ist durch Umsetzung einer Fettsäure mit einem aliphatischen Polyamin mit mindestens 2 Aminogruppen. Hierbei wird ein aminisches Aminoamid gewonnen. Das Polyamin kann optional auch zusätzlich eine oder mehrere OH-Gruppen enthalten. Bevorzugt ist aber, dass das Polyamin nur aus Kohlenstoff, Wasserstoff und Stickstoff besteht. Ganz besonders bevorzugt ist das Polyamin ein rein aliphatisches Polyamin.

Bevorzugte Fettsäuren zur Herstellung der Fettsäureaminoamide sind Monofettsäuren (so wie sie auch zuvor bereits aufgeführt wurden) und/oder oligomerisierte Fettsäuren, welche durch Dimerisierung oder Trimerisierung von ungesättigten Fettsäuren zugänglich sind (sog. Dimer- und Trimersäuren). Vorzugsweise handelt es sich bei den oligomerisierten Fettsäuren um Dimerisierungs- und Trimerisierungsprodukte von ungesättigten Fettsäuren mit 12 bis 20 C-Atomen. Die Polyaminoamide können auch durch kombinierte Umsetzung von Monofettsäuren und oligomerisierten Fettsäuren mit entsprechenden Aminen hergestellt werden.

In einer besonders bevorzugten Ausführungsform werden zur Herstellung der Fettsäureaminoamide ausschließlich Monofettsäuren eingesetzt, vorzugsweise solche mit 10 bis 24, besonders bevorzugt mit 12 bis 20, ganz besonders bevorzugt mit 16 bis 18 C-Atomen. Eine besonders bevorzugte Fettsäure zur Herstellung der Amidoamine ist Tallölfettsäure.

Bevorzugte Amine für die Umsetzung sind lineare und verzweigte Polyalkylenamine, z.B. Ethylenamine wie Ethylendiamin, Diethylentriamin, Triethylentetraamin, Tetraethylenpentaamin sowie Propylenamine wie 1,2- und 1,3-Propylendiamin, Dipropylentriamin und Tripropylentetraamin sowie auch Polyethylenamine, die als verzweigte Polymere des Aziridins angesehen werden können. Als OH-funktionelles Polyamin kann z.B. Aminoethylethanolamin genannt werden.

Besonders bevorzugte Fettsäureaminoamide sind zugänglich durch Umsetzung von C16- bis C18-Monocarbonsäuren mit Aminen ausgewählt aus der Gruppe umfassend Diethylentriamin, Triethylentetraamin und Dipropylentriamin.

Es ist bekannt, dass bestimmte Polyamine auch unter Ausbildung von cyclischen stickstoffhaltigen Strukturen mit Carbonsäuregruppen reagieren können. Auch solche cyclisierten Aminostrukturen sind erfindungsgemäß umfasst. Beispielsweise können Polyamine mit einem Ethylendiamin-Segment unter Ausbildung eines fünfgliedrigen Zyklus (Imidazolin) reagieren, während solche mit einem Propylendiamin-Segment zu einem sechsgliedrigen Zyklus (Tetrahydropyrimidin) reagieren können.

In einer bestimmten Ausführungsform enthält die erfindungsgemäße Öl-in-Wasser- oder Wasser-in-ÖI-Emulsion
(A) 65 bis 94,9 Gew.-% mindestens eines Kohlenwasserstoffs,
(B) 4,9 bis 35 Gew.-% Wasser oder einer wässrigen Salzlösung und
(C) 0,1 bis 6 Gew.-% eines Salzes eines Aminoamids einer Fettsäure und einer sauren Komponente der Formel (I), wobei die Gewichtsanteile der Komponenten (A), (B) und (C) auf die Summe der Massen dieser Komponenten bezogen sind und diese 100 Gew.-% beträgt.

Die Anteile der Komponenten (A), (B) und (C) einschließlich bevorzugter Bereiche können wie folgt zusammengefasst werden:

| *(A) Gew.-%* | *(B) Gew.-%* | *(C) Gew.-%* |
|---|---|---|
| 40 - 97,98 | 2 - 59,98 | 0,02 - 8 |
| 50 - 96,96 | 3 - 49,96 | 0,04 - 6 |
| 65 - 94,9 | 4,9 - 34,9 | 0,1 - 5 |
| 69,5 - 89,5 | 10 - 30 | 0,5 - 4,5 |

Vorteilhaft enthält die erfindungsgemäße Öl-in-Wasser- oder Wasser-in-ÖI-Emulsion
(A) 69,5 bis 89,5 Gew.-% mindestens eines Kohlenwasserstoffs,
(B) 10 bis 30 Gew.-% Wasser oder einer wässrigen Salzlösung und
(C) 0,5 bis 5 Gew.-% eines Salzes eines Aminoamids einer Fettsäure und einer sauren Komponente der Formel (I), wobei die Gewichtsanteile der Komponenten (A), (B) und (C) auf die Summe der Massen dieser Komponenten bezogen sind und diese 100 Gew.-% beträgt.

In der Praxis existieren Anwendungen, bei denen es je nach Anwendungsfeld vorteilhaft sein kann, einen eher hohen oder eher niedrigen Gehalt an Wasser in die Emulsion einzubringen.

Im Allgemeinen ist ein hoher Wassergehalt vorteilhaft. Er bietet folgende Vorteile:
- kostengünstigere Formulierung
- toxikologisch vorteilhaft (viele Mineralöle sind gesundheitlich bedenklich, z.B. Dieselöl)
- ökologisch vorteilhaft; so existieren bei Öl- und Gasbohrungen in einigen Anwendungsfeldern (Offshore-Bereich) z.B. auch gesetzliche Vorgaben, dass das Bohrklein nur dann ins Meer entsorgt werden darf, wenn die Ölbelegung des Materials ein bestimmtes Maximum nicht übersteigt
- die Filtriereigenschaften der Emulsion können verbessert werden, beispielsweise um Feststoffpartikel (z.B. Bohrklein im Rahmen des Bohrprozesses) leichter zu entfernen
- Insbesondere bei Ölbohrungen gelangt beim Bohren Wasser (z.B. aus einer Kreideschicht) in Kontakt mit Tonschichten. Der Ton fängt dann an zu quellen, was die Stabilität des Lochs reduziert. Die Salzlösung in der Ölflüssigkeit nimmt dieses Wasser auf, so dass der Ton nicht quillt. Je mehr Salzfracht ermöglicht wird (d.h. viel wässrige Phase mit einem möglichst hohen Salzgehalt), desto mehr Wasser kann durch osmotischen Druck aufgenommen werden.
- Verbesserung von Arbeitsschutz und Sicherheit: Ab einem gewissen Wassergehalt der Emulsion (typischerweise > 30%) ist diese nicht mehr entflammbar.

Es existieren aber auch Fälle, bei denen ein niedrigerer Wassergehalt vorteilhaft ist.
- Wenn sonstige Eigenschaften der nicht-wässrigen Phase A beim Wirkprofil der Gesamtformulierung eine Rolle spielen (z.B. Schmierwirkung, Hydrophobierung, andere Oberflächenphänomene; Heizwert, z.B. in Verbrennungsmotoren), kann auch hier die technisch sinnvolle maximale Menge der Wasserphase B durch den Einsatzzweck begrenzt sein, selbst wenn durch den Einsatz geeigneter Emulgatoren ein höherer Wasseranteil realisierbar wäre.
- Es existieren bestimmte Bohrschlämme (sog. "relaxed invert emulsion muds"), bei denen der Wassergehalt i.a. niedriger ist als bei Standard-Bohrschlämmen. Gegenüber letzteren zeichnen sich "relaxed invert emulsion muds" dadurch aus, dass sie schnellere Bohrgeschwindigkeit ermöglichen, weniger anfällig für Verunreinigungen sind und bei höheren Temperaturen stabil einsetzbar sind (vgl. hierzu K. van Dyke, "Drilling Fluids", Fifth Impression 2012, Austin/USA, ISBN 0-88698-189-1*).*
- Für höhersiedende Kohlenwasserstoffe (d.h. Sdp. des Kohlenwasserstoffs liegt deutlich über dem von Wasser) gilt:
   bei hohen Temperaturen (> 100°C, bei Atmosphärendruck) kann infolge der Verdunstung/Verdampfung von Wasser unerwünschtes Verhalten eintreten, insbesondere wenn der Wasseranteil besonders hoch ist
- Im Rahmen der Ölförderung treten oft höhere Temperaturen und gleichzeitig hoher Druck auf. Hierbei werden viele Emulsionen - gerade bei hohem Wassergehalt - dann i.a. instabil; gute Emulgatoren können Emulsionen generell stabilisieren, aber infolge der Temperaturbelastung ist hier bzgl. der Menge der Wasserphase eine Obergrenze der Einsetzbarkeit gegeben.

Darüber hinaus existieren Fälle, in denen es wünschenswert und vorteilhaft ist, den Wassergehalt variabel einstellen zu können:
- Es existieren auch Anwendungen, bei denen es wünschenswert ist, den Wassergehalt flexibel in einem niedrigen, mittleren oder hohen Bereich einzustellen. Hierbei macht man sich z.B. zunutze, dass sich bei hohen Wasseranteilen die emulgierten Wassertröpfchen ähnlich einem "Feststoff" verhalten können und daher Viskosität bzw. Gelstärke der Flüssigkeit erhöhen können. Die Viskosität des Gesamtsystems kann so z.B. auch korrigierend justiert werden, indem der Wassergehalt erhöht oder erniedrigt wird, ohne auf andere (teilweise kostspieligere) Methoden der Viskositätsregulierung zurückgreifen zu müssen.

In einer bevorzugten Verfahrensweise wird die erfindungsgemäße Emulsion hergestellt, indem der Kohlenwasserstoff gemäß (A) vorgelegt wird, dann das Salz gemäß (C) zugegeben wird und letztlich nach Zugabe der wässrigen Phase gemäß (B) eine Homogenisierung unter Aufbringung von Scherenergie erfolgt.

In einer anderen bevorzugten Verfahrensweise wird die erfindungsgemäße Emulsion hergestellt, indem die wässrige Phase gemäß (B) vorgelegt wird, dann das Salz gemäß (C) zugegeben wird und letztlich nach Zugabe des Kohlenwasserstoffs gemäß (A) eine Homogenisierung unter Aufbringung von Scherenergie erfolgt.

In einer besonders bevorzugten Verfahrensweise wird die erfindungsgemäße Emulsion hergestellt, indem der Kohlenwasserstoff gemäß (A) sowie die wässrige Phase gemäß (B) vorgelegt werden und dann das Salz gemäß (C) zugegeben wird und eine Homogenisierung unter Aufbringung von Scherenergie erfolgt.

Die Zugabe von optionalen weiteren Komponenten außer denen gemäß (A), (B) und (C) kann fakultativ an den je nach Einsatzzweck vorteilhaften Zeitpunkten des Herstellprozesses der Emulsion erfolgen.

Die Kohlenwasserkomponente (A) besteht aus einem oder mehreren aliphatischen, aromatischen oder araliphatischen Kohlenwasserstoffen. Sie können natürlichen Ursprungs sein (z.B. aus Erdöl und dessen Verarbeitungsprodukten gewonnen) oder vollsynthetisch hergestellt werden. Beispiel hierfür sind Dieselöl (gewonnen aus Erdölfraktionen) oder synthetische Paraffine sowie synthetische interne Olefine. Es kann sich neben vom Erdöl abgeleiteten Kohlenwasserstoffen auch um solche aus regenerativen Quellen handeln, d.h. sie können pflanzlicher oder tierischer Herkunft sein.

Die Komponente (B) ist entweder reines Wasser oder aber eine wässrige Lösung von einem oder mehreren Salzen. Die wässrige Salzlösung enthält als Salze vorteilhaft Halogenide, Carbonate, Sulfate, Phosphate, Formiate, Acetate, Citrate, Lactate, Malate, Tartrate und/oder Hydroxide mindestens eines Alkali- oder Erdalkalimetalls, eines Elements der dritten Hauptgruppe oder Nebengruppenmetalls.

Bevorzugte Salze sind die Salze der Alkali- und Erdalkalimetalle sowie von Zink. Besonders bevorzugt werden die Hauptgruppen 1 und 2, wobei ganz besonders bevorzugt Li, Na, K, Cs, Mg und Ca sind. Die bevorzugten Salze sind Halogenide, Carbonate, Sulfate, Phosphate, Formiate, Hydroxyde, wobei die Halogenide besonders bevorzugt und die Chloride, lodide und Bromide ganz besonders bevorzugt werden.

Eine typische Konzentration des Salzes in der wässrigen Lösung liegt zwischen 0 und 40 Gew.-%, bevorzugt 5 bis 35 Gew.-%, besonders bevorzugt 10 bis 30 Gew.-% und ganz besonders bevorzugt 15 bis 25 Gew.-%.

Die vorliegende Erfindung betrifft auch ein Verfahren zur Herstellung einer Öl-in-Wasser- oder Wasser-in-ÖI-Emulsion, bei dem eine wässrige Komponente (B) und mindestens ein Kohlenwasserstoff (A) in Anwesenheit eines Salzes (C) unter Aufbringung von Scherenergie homogenisiert werden.

Die Erfindung betrifft auch einen Bohrschlamm, der die oben genannten Komponenten (A), (B) und (C) und zusätzlich mindestens eine weitere Komponente enthält, die ausgewählt ist aus der Gruppe der Rheologiesteuerungsmittel, Füllstoffe, anorganischen Thixotropiermittel, Beschwerungsmittel, Benetzungshilfsmittel, Rissheilmittel, Korrosionsschutzmittel und Zusatzstoffe zur Einstellung eines alkalischen Milieus.

Schließlich betrifft die Erfindung auch ein Verfahren zur Erstellung und Stabilisierung eines Bohrlochs zur Vorbereitung und/oder Durchführung der Förderung von Erdöl und/oder Erdgas, bei dem eine erfindungsgemäße Emulsion oder ein Bohrschlamm gemäß der Erfindung verwendet wird.

### Beispiele

### Herstellung der als Verträglichkeitsvermittler geeigneten Additive

**Eingesetzte Rohstoffe**

| **Name** | **Beschreibung** | **Hersteller** |
|---|---|---|
| Shellsol A | Aromatisches Kohlenwasserstoffgemisch | Overlack AG |
| Xylol | Xylol-Isomerengemisch | Overlack AG |
| DETA | Diethylentriamin [Bis(2-aminoethyl)amin] | Merck KGaA |
| Polyimin 300 | Epomin SP-003 | Nippon Shokubai Co., Ltd. |

**Eingesetzte Polyether**

| *Name* | *Beschreibung¹* |
|---|---|
| Polyether 1 | propoxyliertes n-Butanol, 18 WE PO |
| Polyether 2 | ethoxylierter C13/15-Alkohol, 11 WE EO |
| Polyether 3 | ethoxylierter C13/15-Alkohol, 5 WE EO |
| Polyether 4 | alkoxyliertes n-Butanol (Ethylenoxid/Propylenoxid = 1:1), jeweils 12 WE EO und PO |
| Polyether 5 | propoxylierter Stearylalkohol, 5 WE PO |
| Polyether 6 | propoxylierter C10-C14-Fettalkohol, 5 WE PO |
| Polyether 7 | ethoxyliertes Methanol, 11 WE EO |
| Polyether 8 | ethoxylierter C10 Alkohol, 9 WE EO |
| Polyether 9 | ethoxyliertes Isodecanol, 5 WE EO |

| | |
|---|---|
| ¹) WE: gemittelte Anzahl der Wiederholungseinheiten; EO: Ethylenoxid; PO: Propylenoxid. | |

### Analysemethoden

Strukturaufklärung wurde mittels NMR-Spektroskopie durchgeführt.

### Herstellung der sauren Komponenten

Säure A1:
   In einem Reaktionsgefäß mit Rührer, Intensivkühler und Stickstoff-Einlass werden 372,9 g (0,267 mol) Polyether 1, 26,1 g Maleinsäureanhydrid (0,267 mol, Merck) und 0,8 g 2,6-Ditert-butyl-para-Kresol und 0,2 g Kaliumcarbonat eingewogen. Danach wird die Mischung auf 80°C erhitzt und die Temperatur für 4 Stunden gehalten und anschließend das überschüssige Kaliumcarbonat abfiltriert. Es wird ein klares, gelbes-orange farbiges, viskoses Produkt erhalten.
Säure A2:
   In einem Dreihalskolben mit Rührer, Rückflusskühler und Gaseinlass werden unter Stickstoff-Strom 1414,06 g des Polyethers 2 und 200,23 g Maleinsäureanhydrid sowie 0,73 g Kaliumcarbonat auf 80°C erhitzt und 4 h bei dieser Temperatur gerührt. Im Anschluss wird das Kaliumcarbonat durch Filtration abgetrennt. Es wird ein klares, leicht gelbliches Produkt erhalten, dass über Nacht teilweise erstarrt und trüb wird.
Säure A3:
   In einem Reaktionsgefäß mit Rührer, Intensivkühler und Stickstoff-Einlass werden 164,4 g Polyether 3, 35,6 g Bernsteinsäureanhydrid und 0,2 g Kaliumcarbonat eingewogen. Danach wird die Mischung auf 80°C erhitzt und die Temperatur für 4 Stunden gehalten und anschließend das überschüssige Kaliumcarbonat abfiltriert. Es wird ein klares, farbloses, viskoses Produkt erhalten.
Säure A4
   Stufe 1:
      In einem Reaktionsgefäß mit Rührer, Intensivkühler, Wasserabscheider und Stickstoff-Einlass werden 357,6 g (1,24 mol) Tallölfettsäure und 251,2 g Polyethylenglykol 200 (1,24 mol) eingewogen. Danach wird die Mischung auf 120°C erhitzt und die Temperatur anschließend stufenweise innerhalb von 150 Minuten auf 215°C erhöht. Die Mischung wird für 210 Minuten bei dieser Temperatur gehalten und dabei stetig Wasser abdestilliert. Insgesamt werden 17,1 g Wasser abdestilliert (0,95 mol). Es wird ein klares, gelbes und flüssiges Produkt erhalten.
   Stufe 2:
      In einem Reaktionsgefäß mit Rührer, Intensivkühler und Stickstoff-Einlass werden 157,9 g (0,334 mol) des hydroxyfunktionellen Esters aus Stufe 1, 32,7 g Maleinsäureanhydrid (0,334 mol, Merck) und 0,04 g para-Toluolsulfonsäure eingewogen. Danach wird die Mischung auf 100°C erhitzt und die Temperatur für 3 Stunden gehalten. Es wird ein klares, gelbes-orange farbiges, viskoses Produkt erhalten.
Säure A5:
   In einem Reaktionsgefäß mit Rührer, Intensivkühler und Stickstoff-Einlass werden 371,7 g (0,280 mol) Polyether 4, 27,4 g Maleinsäureanhydrid (0,280 mol, Merck) und 0,8 g 2,6-Ditert.-butyl-para Kresol und 0,2 g Kaliumcarbonat eingewogen. Danach wird die Mischung auf 80°C erhitzt und die Temperatur für 4 Stunden gehalten und anschließend das überschüssige Kaliumcarbonat abfiltriert. Es wird ein klares, gelbes, viskoses Produkt erhalten.
Säure A6:
   In einem Reaktionsgefäß mit Rührer, Intensivkühler und Stickstoff-Einlass werden 336,2 g (0,641mol) Polyether 5, 62,9 g Maleinsäureanhydrid (0,641 mol, Merck) und 0,8 g 2,6-Ditert.-butyl-para Kresol und 0,2 g Kaliumcarbonat eingewogen. Danach wird die Mischung auf 80°C erhitzt und die Temperatur für 6 Stunden gehalten und anschließend das überschüssige Kaliumcarbonat abfiltriert. Es wird ein klares, gelbes, viskoses Produkt erhalten.
Säure A7:
   In einem Reaktionsgefäß mit Rührer, Intensivkühler und Stickstoff-Einlass werden 329,4 g (0,711mol) Polyether 6, 69,7 g Maleinsäureanhydrid (0,711 mol, Merck) und 0,8 g 2,6-Ditert.-butyl-para Kresol und 0,2 g Kaliumcarbonat eingewogen. Danach wird die Mischung auf 80°C erhitzt und die Temperatur für 6 Stunden gehalten und anschließend das überschüssige Kaliumcarbonat abfiltriert. Es wird ein klares, gelbes, viskoses Produkt erhalten.
Säure A8:
   Ethoxyliertes Octanol (8 WE EO) wurde mit Chloressigsäure carboxymethyliert.
Säure A9:
   Ein alkoxyliertes Alkoholgemisch (C6-Alkohol mit 3 WE EO und C8-Alkohol mit 8 WE EO) wurde mit Chloressigsäure carboxymethyliert.
Säure A10:
   Ein alkoxyliertes C16 -Alkohol (9 WE EO, 6 WE PO) wurde mit Chloressigsäure carboxymethyliert.
Säure A11:
   Ein ethoxyliertes C16-/C18-Alkoholgemisch (teilweise C18-ungesättigt, 10,5 WE EO) wurde mit Chloressigsäure carboxymethyliert.
Säure A12:
   Ein ethoxyliertes C12-/C14-Alkoholgemisch (10 WE EO) wurde mit Chloressigsäure carboxymethyliert.
Säure A13:
   Ein ethoxyliertes C16-/C18-Alkoholgemisch (ungesättigt, 5 WE EO) wurde mit Chloressigsäure carboxymethyliert.
Säure A14:
   Ein ethoxyliertes C16-/C18-Alkoholgemisch (ungesättigt, 9 WE EO) wurde mit Chloressigsäure carboxymethyliert.
Säure A15:
   Ethoxylierter Isotridecyl-Alkohol (8 WE EO) wurde mit Phosphorpentaoxid phosphoryliert.
Säure A16:
   In einem Reaktionsgefäß mit Rührer, Intensivkühler und Stickstoff-Einlass werden 332,9 g (0,675mol) Polyether 7, 66,2 g Maleinsäureanhydrid (0,675 mol, Merck) und 0,8 g 2,6-Ditert.-butyl-para Kresol und 0,2 g Kaliumcarbonat eingewogen. Danach wird die Mischung auf 80°C erhitzt und die Temperatur für 4 Stunden gehalten und anschließend das überschüssige Kaliumcarbonat abfiltriert. Es wird ein klares, braunes, flüssiges Produkt erhalten.
Säure A17:
   In einem Reaktionsgefäß mit Rührer, Intensivkühler und Stickstoff-Einlass werden 440,2 g (0,670mol) Polyether 8, 65,7 g Maleinsäureanhydrid (0,670 mol, Merck) und 1,0 g 2,6-Ditert.-butyl-para Kresol und 0,2 g Kaliumcarbonat eingewogen. Danach wird die Mischung auf 80°C erhitzt und die Temperatur für 5 Stunden gehalten und anschließend das überschüssige Kaliumcarbonat abfiltriert. Es wird ein klares, leicht lila farbenes, flüssiges Produkt erhalten.
Säure A18:
   In einem Reaktionsgefäß mit Rührer, Intensivkühler und Stickstoff-Einlass werden 345,3 g (0,48 mol) Polyether 2 eingewogen und bei einer Temperatur von 50°C aufgeschmolzen. Zu dieser klaren Lösung werden innerhalb von 10 Minuten 54,7 g Polyphosphorsäure (0,16 mol, Merck) zu gegeben. Danach wird die Mischung für 3 Stunden bei 50°C und anschließend noch mal für 6 Stunden bei 80°C gerührt. Es wird ein trübes, weißes, pastöses Produkt erhalten.
Säure A19:
   Analog zur Herstellvorschrift A2 wurde der Polyether 9 mit Maleinsäureanhydrid zum sauren Halbester umgesetzt.

### Herstellung der basischen Komponenten (Aminoamide)

Base B1:
   In einem Reaktionsgefäß mit Rührer, Intensivkühler und Stickstoff-Einlass werden 503,9 g (0,883 mol) Dimersäure (Pripol 1006, Croda) eingewogen und auf 85°C erwärmt. Zu dieser Lösung werden innerhalb von 2 Stunden langsam 182,2 g (1,766 mol) N,N'-Dimethyl-1,3-diaminopropan zu getropft. Innerhalb von 7 Stunden wurde die Temperatur schrittweise auf 180°C erhöht und währenddessen kontinuierlich Wasser abdestilliert. Diese Temperatur wurde noch für 2 Stunden gehalten. Es wird ein leicht milchiges, dunkelbraunes, hochviskoses Produkt erhalten.
Base B2:
   In einem Reaktionsgefäß mit Rührer, Intensivkühler und Stickstoff-Einlass werden 158,3 g Polyimin 300 eingewogen und auf 80°C erwärmt. Zu dieser Lösung werden innerhalb von 3,5 Stunden langsam 281,9 g Tallölfettsäure zugetropft. Innerhalb von 7 Stunden wurde die Temperatur schrittweise auf 180°C erhöht und währenddessen kontinuierlich Wasser abdestilliert. Diese Temperatur wurde für 2 Stunden gehalten und anschließend noch einmal für 30 Minuten bei etwa 100 mbar das restliche Wasser entfernt. Es wird ein klares, braunes, hochviskoses Produkt erhalten.
Base B3:
   260,7 g Tallölfettsäure und 53,7 g N,N-Bis(2-aminoethyl)amin werden analog zu WO 89/11516 umgesetzt; im Anschluss werden 9,4 g Wasser zugegeben und es wird 2 Stunden bei 80°C gerührt. Es wird ein Gemisch des Diamids und des Monoamids im molaren Verhältnis 1,8 : 1 erhalten.
Base B4:
   In einem Reaktionsgefäß mit Rührer, Intensivkühler, Wasserabscheider und Stickstoff-Einlass werden 81,0 g Tallölfettsäure auf 80°C erwärmt. Dann werden unter Rühren 29,0 g (2-Hydroxyethyl)ethylendiamin zugegeben und auf 130°C erwärmt, während das Reaktionswasser abdestilliert wird. Nach 3 h wird die Temperatur auf 170°C erhöht und nochmals 4 h lang bei dieser Temperatur gerührt. Man erhält das entsprechende Fettsäureimidazolin in Form einer klaren, viskosen, orangefarbenen Flüssigkeit.
Base B5:
   In einem Reaktionsgefäß mit Rührer, Intensivkühler und Stickstoff-Einlass werden 134 g (1,299 mol) DETA und 150 g Xylol eingewogen und auf 80°C erwärmt. Zu dieser Lösung werden innerhalb von 3 Stunden langsam 366 g (1,299 mol) Tallölfettsäure zu getropft. Innerhalb von 8 Stunden wurde die Temperatur schrittweise auf 180°C erhöht und währenddessen kontinuierlich Wasser und Xylol abdestilliert. Diese Temperatur wurde für 4 Stunden gehalten und anschließend noch einmal für 40 Minuten bei etwa 50 mbar das restliche Xylol entfernt. Es wird ein klares, braunes, flüssiges Produkt erhalten. Das Produkt enthält fast ausschließlich das Imidazolin.
Base B6:
   In einem Reaktionsgefäß mit Rührer, Intensivkühler und Stickstoff-Einlass werden 103 g (1,41 mol) 1,3-Diaminopropan und 150 g Xylol (Isomerengemisch) eingewogen und auf 80°C erwärmt. Zu dieser Lösung werden innerhalb von 4,5 Stunden langsam 397 g (1,41 mol) Tallölfettsäure zu getropft. Innerhalb von 8 Stunden wurde die Temperatur schrittweise auf 180°C erhöht und währenddessen kontinuierlich Wasser und Xylol abdestilliert. Diese Temperatur wurde für 4 Stunden gehalten und anschließend noch einmal für 1 Stunde bei etwa 40 mbar das restliche Xylol entfernt. Es wird ein trübes, braunes, cremig-pastöses Produkt erhalten. Das Produkt enthält fast ausschließlich das Imidazolin.
Base B7:
   In einem Reaktionsgefäß mit Rührer, Intensivkühler und Stickstoff-Einlass werden 285,3 g (0,82 mol) des aminofunktionellen Imidazolins B5 und 19,7 g Wasser (1,09 mol, entionisiert) eingewogen und auf 80°C erwärmt. Diese Temperatur wurde für 2 Stunden gehalten und anschließend noch einmal für 4 Stunden bei 90°C gerührt. Es wird ein trübes, braunes, cremig-pastöses Produkt erhalten. Die Ringöffnung des Imidazolins erfolgte hierdurch quantitativ.
Base B8:
   In einem Reaktionsgefäß mit Rührer, Intensivkühler und Stickstoff-Einlass werden 283,9 g (0,89 mol) des Imidazolins B6 und 16,1 g Wasser (0,89 mol, entionisiert) eingewogen und auf 80°C erwärmt. Diese Temperatur wurde für 2 Stunden. Es wird ein trübes, hellbraunes, cremig-pastöses Produkt erhalten. Die Ringöffnung des Imidazolins erfolgte hierdurch quantitativ.

### Herstellung der Verträglichkeitsvermittler durch Versalzung

Beispiel C1:
   In einem Reaktionsgefäß mit Rührer, Intensivkühler, Tropftrichter und Stickstoff-Einlass werden 190,3 g (0,205 mol) der Säure A2 eingewogen und auf ca. 80°C erwärmt. Danach werden 9,7 g des Polyiminoamids B2 (0,205 mol Amin) zugegeben. Zur Vervollständigung der Reaktion wird die Lösung für 2 Stunden bei 80°C gerührt. Es wird ein klares, orangefarbenes, viskoses Produkt erhalten, das innerhalb eines Tages teilweise erstarrt.
Beispiel C2:
   In einem Reaktionsgefäß mit Rührer, Intensivkühler, Tropftrichter und Stickstoff-Einlass werden 39,5 g (0,173 mol) des Imidazolins B5 eingewogen und auf ca. 70°C erwärmt. Danach werden 160,5 g der Säure A2 (0,173 mol) innerhalb von 15 Minuten zugetropft. Zur Vervollständigung der Reaktion wird die Lösung für 2 Stunden bei 80°C gerührt. Es wird ein klares, rotbraunes, viskoses Produkt erhalten, das innerhalb eines Tages teilweise erstarrt.
Beispiel C3:
   In einem Reaktionsgefäß mit Rührer, Intensivkühler, Tropftrichter und Stickstoff-Einlass werden 90,7 g (0,18 mol) des aminofunktionellen Amids B3 eingewogen und auf ca. 60°C erwärmt. Danach werden 109,3 g der Säure A3 (0,18 mol) innerhalb von 5 Minuten zugetropft. Zur Vervollständigung der Reaktion wird die Lösung für 2 Stunden bei 80°C gerührt. Es wird ein klares, dunkelbraunes, hochviskoses Produkt erhalten.
Beispiel C4:
   In einem Reaktionsgefäß mit Rührer, Intensivkühler, Tropftrichter und Stickstoff-Einlass werden 90,4 g (0,179 mol) des aminofunktionellen Amids B3 eingewogen und auf ca. 60°C erwärmt. Danach werden 109,6 g der Säure A19 (0,179 mol) innerhalb von 5 Minuten zugetropft. Zur Vervollständigung der Reaktion wird die Lösung für 2 Stunden bei 80°C gerührt. Es wird ein klares, dunkelbraunes, hochviskoses Produkt erhalten.
Beispiel C5:
   In einem Reaktionsgefäß mit Rührer, Intensivkühler, Tropftrichter und Stickstoff-Einlass werden 70,6 g (0,14 mol) des aminofunktionellen Amids B3 eingewogen und auf ca. 60°C erwärmt. Danach werden 129,4 g der Säure A2 (0,14 mol) innerhalb von 5 Minuten zugetropft. Zur Vervollständigung der Reaktion wird die Lösung für 2 Stunden bei 80°C gerührt. Es wird ein klares, dunkelbraunes, hochviskoses Produkt erhalten, das innerhalb eines Tages zu einem pastösen Produkt erstarrt.
Beispiel C6:
   In einem Reaktionsgefäß mit Rührer, Intensivkühler, Tropftrichter und Stickstoff-Einlass werden 53,1 g (0,094 mol) der Säure A4 eingewogen und auf ca. 80°C erwärmt. Danach werden 36,7 g der Base B4 (0,094 mol) innerhalb von 5 Minuten zugetropft. Zur Vervollständigung der Reaktion wird die Lösung für 2 Stunden bei 80°C gerührt. Es wird ein klares, dunkelbraunes, hochviskoses Produkt erhalten.
Beispiel C7:
   In einem Reaktionsgefäß mit Rührer, Intensivkühler, Tropftrichter und Stickstoff-Einlass werden 37,3 g des Amids B3 eingewogen und auf ca. 80°C erwärmt. Danach werden 63,8 g der Säure A4 innerhalb von 15 Minuten zugetropft. Zur Vervollständigung der Reaktion wird die Lösung für 2 Stunden bei 80°C gerührt. Es wird eine braune, viskose Flüssigkeit erhalten.
Beispiel C8:
   In einem Reaktionsgefäß mit Rührer, Intensivkühler, Tropftrichter und Stickstoff-Einlass werden 92,1 g (0,182 mol) des aminofunktionellen Amids B3 eingewogen und auf ca. 60°C erwärmt. Danach werden 107,9 g der Säure A7 (0,182 mol) innerhalb von 10 Minuten zugetropft. Zur Vervollständigung der Reaktion wird die Lösung für 2 Stunden bei 80°C gerührt. Es wird ein klares, dunkelbraunes, hochviskoses Produkt erhalten.
Beispiel C9:
   In einem Reaktionsgefäß mit Rührer, Intensivkühler, Tropftrichter und Stickstoff-Einlass werden 91,7 g (0,181 mol) des aminofunktionellen Amids B3 eingewogen und auf ca. 60°C erwärmt. Danach werden 108,3 g der Säure A16 (0,181 mol) innerhalb von 10 Minuten zugetropft. Zur Vervollständigung der Reaktion wird die Lösung für 2 Stunden bei 80°C gerührt. Es wird ein trübes, dunkelbraunes, hochviskoses Produkt erhalten. -
Beispiel C10:
   In einem Reaktionsgefäß mit Rührer, Intensivkühler, Tropftrichter und Stickstoff-Einlass werden 40,9 g (0,081 mol) des aminofunktionellen Amids B3 eingewogen und auf ca. 60°C erwärmt. Danach werden 121,4 g der Säure A1 (0,081 mol) innerhalb von 10 Minuten zu getropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C11:
   In einem Reaktionsgefäß mit Rührer, Intensivkühler, Tropftrichter und Stickstoff-Einlass werden 44,6 g (0,088 mol) des aminofunktionellen Amids B3 eingewogen und auf ca. 60°C erwärmt. Danach werden 134,2 g der Säure A5 (0,088 mol) innerhalb von 10 Minuten zu getropft. Zur Vervollständigung der Reaktion werden 76,6 g Shellsol A zugesetzt und die Lösung wird für 2 Stunden bei 80°C gerührt. Es wird ein klares, dunkelbraunes, flüssiges Produkt erhalten, dessen Wirkstoffgehalt bei 70% liegt.
Beispiel C12:
   In einem Reaktionsgefäß mit Rührer, Intensivkühler, Tropftrichter und Stickstoff-Einlass werden 62,3 g (0,131 mol) des aminofunktionellen Amids B3 eingewogen und auf ca. 70°C erwärmt. Danach werden 87,7 g der Säure A8 (0,131 mol) innerhalb von 15 Minuten zu getropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C13:
   In einem Reaktionsgefäß mit Rührer, Intensivkühler, Tropftrichter und Stickstoff-Einlass werden 69,4 g (0,146 mol) des aminofunktionellen Amids B3 eingewogen und auf ca. 70°C erwärmt. Danach werden 79,1 g der Säure A9 (0,146 mol) innerhalb von 15 Minuten zu getropft. Zur Vervollständigung der Reaktion wird die Lösung für 2 Stunden bei 80°C gerührt. Es wird ein klares, dunkelbraunes, hochviskoses Produkt erhalten.
Beispiel C14:
   In einem Reaktionsgefäß mit Rührer, Intensivkühler, Tropftrichter und Stickstoff-Einlass werden 43,0 g (0,090 mol) des aminofunktionellen Amids B3 eingewogen und auf ca. 70°C erwärmt. Danach werden 110,5 g der Säure A10 (0,090 mol) innerhalb von 15 Minuten zu getropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C15:
   In einem Reaktionsgefäß mit Rührer, Intensivkühler, Tropftrichter und Stickstoff-Einlass werden 46,3 g (0,097 mol) des aminofunktionellen Amids B3 eingewogen und auf ca. 70°C erwärmt. Danach werden 101,7 g der Säure A11 (0,097 mol) innerhalb von 15 Minuten zu getropft. Zur Vervollständigung der Reaktion wird die Lösung für 2 Stunden bei 80°C gerührt. Es wird ein milchig-trübes, dunkelbraunes, hochviskoses Produkt erhalten.
Beispiel C16:
   In einem Reaktionsgefäß mit Rührer, Intensivkühler, Tropftrichter und Stickstoff-Einlass werden 58,7 g (0,123 mol) des aminofunktionellen Amids B3 eingewogen und auf ca. 70°C erwärmt. Danach werden 87,3 g der Säure A12 (0,123 mol) innerhalb von 15 Minuten zu getropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C17:
   In einem Reaktionsgefäß mit Rührer, Intensivkühler, Tropftrichter und Stickstoff-Einlass werden 62 g (0,130 mol) des aminofunktionellen Amids B3 eingewogen und auf ca. 70°C erwärmt. Danach werden 94 g der Säure A13 (0,130 mol) innerhalb von 15 Minuten zu getropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C18:
   In einem Reaktionsgefäß mit Rührer, Intensivkühler, Tropftrichter und Stickstoff-Einlass werden 59,8 g (0,125 mol) des aminofunktionellen Amids B3 eingewogen und auf ca. 70°C erwärmt. Danach werden 107,2 g der Säure A14 (0,125 mol) innerhalb von 15 Minuten zugetropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C19:
   In einem Reaktionsgefäß mit Rührer, Intensivkühler, Tropftrichter und Stickstoff-Einlass werden 93,2 g (0,195 mol) des aminofunktionellen Amids B3 eingewogen und auf ca. 70°C erwärmt. Danach werden 106,9 g der Säure A15 innerhalb von 20 Minuten zugetropft. Zur Vervollständigung der Reaktion wird die Lösung für 2 Stunden bei 80°C gerührt. Es wird ein trübes, dunkelbraunes, hochviskoses und teilweise erstarrtes Produkt erhalten.
Beispiel C20:
   In einem Reaktionsgefäß mit Rührer, Intensivkühler, Tropftrichter und Stickstoff-Einlass werden 59,3 g (0,260 mol) des Imidazolins B5 eingewogen und auf ca. 70°C erwärmt. Danach werden 140,7 g der Säure A9 (0,260 mol) innerhalb von 15 Minuten zu getropft. Zur Vervollständigung der Reaktion wird die Lösung für 2 Stunden bei 80°C gerührt. Es wird ein klares, braunes, hochviskoses Produkt erhalten.
Beispiel C21:
   In einem Reaktionsgefäß mit Rührer, Intensivkühler, Tropftrichter und Stickstoff-Einlass werden 38,5 g (0,174 mol) des aminofunktionellen Amids B7 eingewogen und auf ca. 70°C erwärmt. Danach werden 161,5 g der Säure A2 (0,174 mol) innerhalb von 15 Minuten zu getropft. Zur Vervollständigung der Reaktion wird die Lösung für 2 Stunden bei 80°C gerührt. Es wird ein klares, rotbraunes, viskoses Produkt erhalten, das innerhalb eines Tages vollkommen erstarrt.
Beispiel C22:
   In einem Reaktionsgefäß mit Rührer, Intensivkühler, Tropftrichter und Stickstoff-Einlass werden 58,0 g (0,263 mol) des aminofunktionellen Amids B7 eingewogen und auf ca. 70°C erwärmt. Danach werden 142,0 g der Säure A9 (0,263 mol) innerhalb von 15 Minuten zugetropft. Zur Vervollständigung der Reaktion wird die Lösung für 2 Stunden bei 80°C gerührt. Es wird ein klares, braunes, viskoses Produkt erhalten, das innerhalb eines Tages teilweise erstarrt.
Beispiel C23:
   In einem Reaktionsgefäß mit Rührer, Intensivkühler, Tropftrichter und Stickstoff-Einlass werden 50,0 g (0,10 mol) des Imidazolins B6 eingewogen und auf ca. 70°C erwärmt. Danach werden 92,6 g der Säure A2 (0,10 mol) innerhalb von 15 Minuten zugetropft. Zur Vervollständigung der Reaktion wird die Lösung für 2 Stunden bei 80°C gerührt. Es wird ein trübes, braunes, cremiges Produkt erhalten, das innerhalb eines Tages vollkommen erstarrt.
Beispiel C24:
   In einem Reaktionsgefäß mit Rührer, Intensivkühler, Tropftrichter und Stickstoff-Einlass werden 61,1 g (0,122 mol) des Imidazolins B6 eingewogen und auf ca. 70°C erwärmt. Danach werden 66,0 g der Säure A9 (0,122 mol) innerhalb von 15 Minuten zugetropft. Zur Vervollständigung der Reaktion wird die Lösung für 2 Stunden bei 80°C gerührt. Es wird ein trübes, braunes, cremiges Produkt erhalten, das innerhalb eines Tages teilweise fest wird.
Beispiel C25:
   In einem Reaktionsgefäß mit Rührer, Intensivkühler, Tropftrichter und Stickstoff-Einlass werden 70,1 g (0,140 mol) des aminofunktionellen Amids B8 eingewogen und auf ca. 70°C erwärmt. Danach werden 129,9 g der Säure A2 (0,140 mol) innerhalb von 15 Minuten zu getropft. Zur Vervollständigung der Reaktion wird die Lösung für 2 Stunden bei 80°C gerührt. Es wird ein klares, braunes, viskoses Produkt erhalten, das innerhalb eines Tages fest, trüb und hellbraun wird.
Beispiel C26:
   In einem Reaktionsgefäß mit Rührer, Intensivkühler, Tropftrichter und Stickstoff-Einlass werden 96,2 g (0,192 mol) des aminofunktionellen Amids B8 eingewogen und auf ca. 70°C erwärmt. Danach werden 103,8 g der Säure A9 (0,192 mol) innerhalb von 15 Minuten zu getropft. Zur Vervollständigung der Reaktion wird die Lösung für 2 Stunden bei 80°C gerührt. Es wird ein klares, braunes, viskoses Produkt erhalten, das innerhalb eines Tages trüb und hochviskos wird.
Beispiel C27:
   In einem Reaktionsgefäß mit Rührer, Intensivkühler, Tropftrichter und Stickstoff-Einlass werden 42,5 g (0,058 mol) des aminofunktionellen Diamids B1 eingewogen und auf ca. 60°C erwärmt. Danach werden 107,5 g der Säure A2 (0,116 mol) innerhalb von 5 Minuten zu getropft. Zur Vervollständigung der Reaktion wird die Lösung für 2 Stunden bei 80°C gerührt. Es wird ein klares, braunes, viskoses Produkt erhalten, das innerhalb eines Tages fest, trüb und hellbraun wird.
Beispiel C28:
   In einem Reaktionsgefäß mit Rührer, Intensivkühler, Tropftrichter und Stickstoff-Einlass werden 60,6 g (0,082 mol) des aminofunktionellen Diamids B1 eingewogen und auf ca. 60°C erwärmt. Danach werden 89,4 g der Säure A9 (0,164 mol) innerhalb von 5 Minuten zu getropft. Zur Vervollständigung der Reaktion wird die Lösung für 2 Stunden bei 80°C gerührt. Es wird ein klares, braunes, viskoses Produkt erhalten.
Beispiel C29:
   In einem Reaktionsgefäß mit Rührer, Intensivkühler, Tropftrichter und Stickstoff-Einlass werden 184,0 g (0,340 mol) der Säure A9 eingewogen und auf ca. 80°C erwärmt. Danach werden 16,0 g Polyaminoamids B2 (0,340 mol Amin) zugegeben. Zur Vervollständigung der Reaktion wird die Lösung für 2 Stunden bei 80°C gerührt. Es wird ein klares, orangefarbenes, viskoses Produkt erhalten, das innerhalb eines Tages teilweise erstarrt.
Beispiel C30:
   In einem Reaktionsgefäß mit Rührer, Intensivkühler, Tropftrichter und Stickstoff-Einlass werden 79,0 g (0,168 mol) des aminofunktionellen Amids B3 eingewogen und auf ca. 80°C erwärmt. Danach werden 121,0 g der Säure A17 (0,168 mol) innerhalb von 15 Minuten zugetropft. Zur Vervollständigung der Reaktion wird die Lösung für 2 Stunden bei 80°C gerührt. Es wird ein klares, dunkelbraunes, hochviskoses Produkt erhalten, das innerhalb eines Tages teilweise erstarrt.
Beispiel C31:
   In einem Reaktionsgefäß mit Rührer, Intensivkühler, Tropftrichter und Stickstoff-Einlass werden 123,7 g (0,262 mol) des aminofunktionellen Amids B3 eingewogen und auf ca. 80°C erwärmt. Danach werden 87,1 g des sauren Phosphorsäureesters A18 (0,262 mol) innerhalb von 15 Minuten zugetropft. Zur Vervollständigung der Reaktion wird die Lösung für 2 Stunden bei 80°C gerührt. Es wird ein klares, dunkelbraunes, hochviskoses Produkt erhalten, das innerhalb eines Tages zu einem trüben und hellbraunen Material erstarrt.
Beispiel C32:
   In einem Reaktionsgefäß mit Rührer, Intensivkühler, Tropftrichter und Stickstoff-Einlass werden 87,4 g (0,173 mol) des aminofunktionellen Amids B3 eingewogen und auf ca. 60°C erwärmt. Danach werden 112,6 g der Säure A6 (0,173 mol) innerhalb von 10 Minuten zugetropft. Zur Vervollständigung der Reaktion wird die Lösung für 2 Stunden bei 80°C gerührt. Es wird ein klares, dunkelbraunes, hochviskoses Produkt erhalten.

### Vergleichsbeispiele (nicht erfindungsgemäß)

Folgende Produkte wurden als Vergleichsbeispiele gemäß dem Stand der Technik herangezogen:
Vergleichsbeispiel V1:
   Propoxyliertes verzweigtes Polyethylenimin mit einem Molekulargewicht von 5000 g/mol (gemäß der Lehre von US 3.259.572, Anspruch 1, Strukturtyp (3): oxyalkylierte verzweigte Polyalkylenpolyamine), 50%-ig gelöst in Methoxypropanol, kommerziell erhältlich als Lupasol PO100 (BASF).
Vergleichsbeispiel V2 (in Analogie zu Beispiel XII aus US 3.169.113, Nalco):
   Stufe 1:
      In einem Reaktionsgefäß mit Rührer, Intensivkühler, Wasserabscheider und Stickstoff-Einlass werden 349,3 g (1,24 mol) Tallölfettsäure eingewogen und auf 80°C aufgeheizt. Hierzu werden innerhalb von 1 Stunde 50,7 g (0,31 mol) Triethylentetramin zu getropft. Die Temperatur wurde schrittweise innerhalb von 6 Stunden auf 180°C erhöht wobei stetig Wasser abdestilliert wurde. Diese Temperatur wurde noch für 4 Stunden gehalten, die letzte Stunde unter Vakuum bei 200 mbar. Nach Abkühlung wird ein trübes, hellbraunes, pastöses Produkt erhalten.
      Im Anschluss werden in einem Reaktionsgefäß mit Rührer, Intensivkühler und Stickstoff-Einlass 105,2 g des so erhaltenen Amids mit 63 g Xylol (Isomerengemisch) bei 60°C für etwa 30 Minuten homogenisiert. Nach Abkühlung wird ein trübes, hellbraunes, pastöses Produkt erhalten.
   Stufe 2:
      In einem Reaktionsgefäß mit Rührer, Intensivkühler und Stickstoff-Einlass werden 115,3 g des Diesters von Triethanolamin mit 59,7 g Xylol (Isomerengemisch) bei 60°C für etwa 30 Minuten homogenisiert. Nach Abkühlung wird ein klares, gelbes, flüssiges Produkt erhalten.
   Stufe 3 (Produkt):
      In einem Reaktionsgefäß mit Rührer, Intensivkühler und Stickstoff-Einlass werden 30 mL des aufgeschmolzenen und gelösten Amids aus Stufe 1 mit 80 mL des gelösten Diesters von Triethanolamin aus Stufe 2 bei 60°C für etwa 30 Minuten homogenisiert. Nach Abkühlung wird ein klares, hellbraunes, flüssiges Produkt erhalten.
Vergleichsbeispiel V3:
   Entspricht Beispiel I aus US 2.946.746 (Union Oil Company of California).
Vergleichsbeispiel V4:
   Entspricht Beispiel 1 aus WO 89/11516 (Sandoz). An Stelle von geruchslosem Kerosin wurde ein Xylol-Isomerengemisch als Lösemittel verwendet.
Vergleichsbeispiel V5:
   Verzweigtes Polyethylenimin mit einem Molekulargewicht von 1300 g/mol (gemäß der Lehren von US 3.259.572, Anspruch 1, Strukturtyp (1): verzweigte Polyalkylenpolyamine)
Vergleichsbeispiel V6:
   Ethoxyliertes verzweigtes Polyethylenimin mit einem Molekulargewicht von 11000 g/mol und einer Aminzahl von 47 (gemäß der Lehre von US 3.259.572, Anspruch 1, Strukturtyp (3): oxyalkylierte verzweigte Polyalkylenpolyamine)

### Anwendungstechnische Prüfung der als Verträglichkeitsvermittler geeigneten Additive

**Eingesetzte Rohstoffe**

| **Name** | **Beschreibung** | **Hersteller** |
|---|---|---|
| C1618 Isomerized Olefin | Synthetisches Olefin | Ineos Oligomers |
| Calciumchlorid (Anhydrid) | | Sigma-Aldrich |
| Isopar H | Synthetisches Isoparafin | Exxon Mobil Chemical |
| LVT 200 | Erdöl-Destillat | Deep South Chemical |
| XP-07 | Synthetisches Parafin ("pure normal alkane mixture") | Halliburton-Baroid |
| Claytone 3 | Organophiles Schichtsilikat | BYK-Chemie GmbH |
| Barite API 4.1 | Natürliches Bariumsulfat | Eurotech Int Sp. Z. (Mielec, Polen) |
| Natriumsulfat (wasserfrei) | | VWR International |

Eine 25 Gew.%-ige Lösung von CaCl₂ wurde durch Lösen von Calciumchlorid (Anhydrid) in VE-Wasser hergestellt.
Eine 15 Gew.%-ige Lösung von Na₂SO₄ wurde durch Lösen von Natriumsulfat (wasserfrei) in VE-Wasser hergestellt.

**Erklärung der Bewertungsskala**

| | | |
|---|---|---|
| Homogenität: | 1 | homogen |
| | 2 | leicht inhomogen |
| | 3 | inhomogen |
| | 4 | stark inhomogen |
| | 5 | völlig inhomogen |

### Prüfsystem 1: Emulsion bestehend aus einem synthetischem Olefin und wässriger Calciumchlorid-Lösung

Zur Herstellung der Emulsion wird in einem 800 ml-Edelstahlbecher 107,3 g C1618-Isomerized Olefin vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 84,5 g der Calciumchlorid-Lösung (25%-ig in Wasser) erfolgt eine weitere Homogenisierung 10 min auf Stufe 1.
Nach der Herstellung werden 120 g der hergestellten Emulsion in ein 150 ml-Schraubdeckelglas gefüllt und bei Raumtemperatur 14 Tage gelagert. Anschließend erfolgt eine Bewertung der Emulsion. Hierzu wird die Separation in % bezogen auf die Gesamtfüllhöhe im Glas ermittelt. Daneben erfolgt eine visuelle Bewertung der Homogenität der Emulsion gemäß der o.a. Bewertungsskala. Je geringer die Separation in % und desto niedriger die Bewertungszahl der Homogenität ist, desto besser ist die emulgierende Eigenschaft des jeweiligen Verträglichkeitsvermittlers.

**Formulierung der Emulsion:**

| | |
|---|---|
| C1618 Isomer. Olefin | 107,3 g |
| Emulgator | 8,2 g |
| 5 min Hamilton Beach Mixer Stufe 1 | |
| Calciumchlorid Lösung | 84,5 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 86 | 5 |
| Vergleich V4 | 53 | 4 |
| Vergleich V2 | 35 | 3-4 |
| Vergleich V5 | 33 | 5 |
| Beispiel C5 | 0 | 1 |
| Beispiel C7 | 19 | 3 |
| Beispiel C10 | 10 | 2 |
| Beispiel C12 | 7 | 2 |
| Beispiel C13 | 3 | 2 |
| Beispiel C15 | 5 | 2 |
| Beispiel C16 | 11 | 2 |
| Beispiel C2 | 10 | 2 |
| Beispiel C20 | 6 | 2 |
| Beispiel C21 | 9 | 2 |
| Beispiel C22 | 6 | 2 |
| Beispiel C23 | 9 | 2 |
| Beispiel C24 | 4 | 2 |
| Beispiel C25 | 9 | 2 |
| Beispiel C26 | 6 | 2 |

In der Tabelle ist erkennbar, dass in Gegenwart der erfindungsgemäßen Verträglichkeitsvermittler eine deutlich bessere Stabilisierung der Emulsion erzielt wird als in Abwesenheit eines Emulgators oder bei Verwendung der nicht erfindungsgemäßen Vergleichsbeispiele. Die erfindungsgemäßen Verträglichkeitsvermittler zeigen somit deutlich verbesserte Anwendungseigenschaften.

### Prüfsystem 2: Emulsion bestehend aus einem synthetischem Isoparaffin (Isopar H) und wässriger Calciumchlorid-Lösung

Zur Herstellung der Emulsion wird in einem 800 ml-Edelstahlbecher 107,3 g Isopar H vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 84,5 g der Calciumchlorid-Lösung (25%-ig in Wasser) erfolgt eine weitere Homogenisierung 10 min auf Stufe 1. Nach der Herstellung werden 120 g der hergestellten Emulsion in ein 150 ml-Schraubdeckelglas gefüllt und bei Raumtemperatur 14 Tage gelagert. Anschließend erfolgt eine Bewertung der Emulsion analog zu der bei Prüfsystem 1 beschriebenen Methode.

**Formulierung der Emulsion:**

| | |
|---|---|
| Isopar H | 107,3 g |
| Emulgator | 8,2 g |
| 5 min Hamilton Beach Mixer Stufe 1 | |
| Calciumchlorid Lösung | 84,5 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 86 | 5 |
| Vergleich V4 | 57 | 4 |
| Vergleich V3 | 40 | 4 |
| Vergleich V2 | 54 | 4 |
| Beispiel C13 | 9 | 2 |
| Beispiel C20 | 3 | 2 |
| Beispiel C22 | 3 | 2 |
| Beispiel C23 | 7 | 2 |
| Beispiel C24 | 0 | 1 |
| Beispiel C25 | 4 | 2 |
| Beispiel C26 | 30 | 3-4 |

In der Tabelle ist erkennbar, dass in Gegenwart der erfindungsgemäßen Verträglichkeitsvermittler eine deutlich bessere Stabilisierung der Emulsion erzielt wird als in Abwesenheit eines Emulgators oder bei Verwendung der Vergleichsbeispiele V2, V3 und V4. Die erfindungsgemäßen Verträglichkeitsvermittler zeigen somit deutlich verbesserte Anwendungseigenschaften.

### Prüfsystem 3: Emulsion bestehend aus einem Erdöldestillat (LVT 200) und wässriger Calciumchlorid-Lösung

Zur Herstellung der Emulsion wird in einem 800 ml-Edelstahlbecher 107,3 g LVT 200 vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 84,5 g der Calciumchlorid-Lösung (25%-ig in Wasser) erfolgt eine weitere Homogenisierung 10 min auf Stufe 1. Nach der Herstellung werden 120 g der hergestellten Emulsion in ein 150 ml-Schraubdeckelglas gefüllt und bei Raumtemperatur 14 Tage gelagert. Anschließend erfolgt eine Bewertung der Emulsion analog zu der bei Prüfsystem 1 beschriebenen Methode.

**Formulierung der Emulsion:**

| | |
|---|---|
| LVT 200 | 107,3 g |
| Emulgator | 8,2 g |
| 5 min Hamilton Beach Mixer Stufe 1 | |
| Calciumchlorid Lösung | 84,5 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 83 | 5 |
| Vergleich V4 | 51 | 4 |
| Vergleich V3 | 36 | 4 |
| Vergleich V2 | 49 | 4 |
| Beispiel C13 | 13 | 2 |
| Beispiel C2 | 8 | 2 |
| Beispiel C20 | 4 | 2 |
| Beispiel C21 | 10 | 2 |
| Beispiel C22 | 4 | 2 |
| Beispiel C23 | 7 | 2 |
| Beispiel C24 | 6 | 2 |
| Beispiel C25 | 12 | 2 |
| Beispiel C26 | 6 | 2 |

In der Tabelle ist erkennbar, dass in Gegenwart der erfindungsgemäßen Verträglichkeitsvermittler eine deutlich bessere Stabilisierung der Emulsion erzielt wird als in Abwesenheit eines Emulgators oder bei Verwendung der Vergleichsbeispiele V2, V3 und V4. Die erfindungsgemäßen Verträglichkeitsvermittler zeigen somit deutlich verbesserte Anwendungseigenschaften.

### Prüfsystem 4: Emulsion bestehend aus einem synthetischem Paraffin auf Basis eines n-Alkangemischs (XP-07) und wässriger Calciumchlorid-Lösung

Zur Herstellung der Emulsion wird in einem 800 mL-Edelstahlbecher 107,3 g XP-07 vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 84,5 g der Calciumchlorid-Lösung (25%-ig in Wasser) erfolgt eine weitere Homogenisierung 10 min auf Stufe 1.
Nach der Herstellung werden 120 g der hergestellten Emulsion in ein 150 ml-Schraubdeckelglas gefüllt und bei Raumtemperatur 14 Tage gelagert. Anschließend erfolgt eine Bewertung der Emulsion analog zu der bei Prüfsystem 1 beschriebenen Methode.

**Formulierung der Emulsion:**

| | |
|---|---|
| XP-07 | 107,3 g |
| Emulgator | 8,2 g |
| 5 min Hamilton Beach Mixer Stufe 1 | |
| Calciumchlorid Lösung | 84,5 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 84 | 5 |
| Vergleich V4 | 57 | 5 |
| Vergleich V3 | 34 | 5 |
| Vergleich V2 | 56 | 5 |
| Beispiel C13 | 10 | 2 |
| Beispiel C20 | 3 | 2 |
| Beispiel C22 | 3 | 2 |
| Beispiel C26 | 18 | 3 |

In der Tabelle ist erkennbar, dass in Gegenwart der erfindungsgemäßen Verträglichkeitsvermittler eine deutlich bessere Stabilisierung der Emulsion erzielt wird als in Abwesenheit eines Emulgators oder bei Verwendung der Vergleichsbeispiele V2, V3 und V4. Die erfindungsgemäßen Verträglichkeitsvermittler zeigen somit deutlich verbesserte Anwendungseigenschaften.

### Prüfsystem 5: Bohrschlamm auf Basis eines Erdöldestillats (LVT 200) und wässriger Calciumchloridlösung

Zur Herstellung des Bohrschlamms wird in einem 800 ml-Edelstahlbecher 162,0 g LVT 200 vorgelegt. Anschließend werden nach der unten angegebenen Formulierung nacheinander die weiteren Bestandteile zugegeben und nach jeder Position 5 min. mit einem Hamilton Beach Mixer (Typ GM20 / Model HMD 200-CE) auf Stufe 1 homogenisiert. An letzter Position erfolgt die Zugabe des Barite API 4.1 und anschließende Homogenisierung für 10 min. mit einem Hamilton Beach Mixer (Typ GM20 / Model HMD 200-CE) auf Stufe 1.
Nach der Herstellung wird der Bohrschlamm in ein 500 ml-Schraubdeckelglas gefüllt und direkt visuell die Homogenität des Bohrschlamms bewertet.

**Formulierung des Bohrschlamms:**

| Rohstoff | Einwaage / g | Homogenisierung* |
|---|---|---|
| LVT 200 | 162,00 | |
| CLAYTONE 3 | 0,90 | 5 min. |
| Calciumhydroxid | 2,65 | 5 min. |
| Emulgator | 8,80 | 5 min. |
| Calciumchloridlösung (25%ig) | 54,00 | 5 min. |
| Barite API 4.1 | 271,65 | 10 min. |
| gesamt | 500,00 | |

| | | |
|---|---|---|
| *Hamilton Beach Mixer Stufe 1 | | |

**Erklärung der Bewertungsskala**

| | | |
|---|---|---|
| Homogenität: | 1 | homogen |
| | 2 | leicht inhomogen |
| | 3 | inhomogen |
| | 4 | stark inhomogen |
| | 5 | völlig inhomogen |

**Ergebnisse:**

| **Produkt** | **Homogenität** |
|---|---|
| Nullprobe ohne Emulgator | 5 |
| Vergleich V1 | 5 |
| Vergleich V5 | 5 |
| Vergleich V6 | 5 |
| Beispiel C1 | 1 |
| Beispiel C12 | 1 |
| Beispiel C13 | 1 |
| Beispiel C2 | 1 |
| Beispiel C31 | 1 |

In der Tabelle ist erkennbar, dass in Gegenwart der erfindungsgemäßen Verträglichkeitsvermittler eine gute Stabilisierung der Emulsion im Bohrschlamm erzielt wird. In Abwesenheit eines Emulgators oder bei Verwendung der Vergleichsbeispiele erfolgte eine sofortige Koagulation des Bariumsulfats, so dass der Bohrschlamm technisch nicht mehr einsetzbar ist. Die erfindungsgemäßen Verträglichkeitsvermittler sind somit deutlich besser zur Herstellung und Stabilisierung eines Bohrschlamms geeignet als die Vergleichsbeispiele.

### Prüfsystem 6: Bohrschlamm auf Basis eines Erdöldestillats (LVT 200) und wässriger Calciumchloridlösung

Zur Herstellung des Bohrschlamms wird in einem 800 ml-Edelstahlbecher 194,4 g LVT 200 vorgelegt. Anschließend werden nach der unten angegebenen Formulierung nacheinander die weiteren Bestandteile zugegeben und nach jeder Position 5 min. mit einem Hamilton Beach Mixer (Typ GM20 / Model HMD 200-CE) auf Stufe 1 homogenisiert. An letzter Position erfolgt die Zugabe des Barite API 4.1 und anschließende Homogenisierung für 10 min. mit einem Hamilton Beach Mixer (Typ GM20 / Model HMD 200-CE) auf Stufe 1.
Nach der Herstellung wird der Bohrschlamm in ein 500 ml-Schraubdeckelglas gefüllt und direkt visuell die Homogenität des Bohrschlamms bewertet.

**Formulierung des Bohrschlamms:**

| Rohstoff | Einwaage / g | Homogenisierung* |
|---|---|---|
| LVT 200 | 194,40 | |
| CLAYTONE 3 | 0,90 | 5 min. |
| Calciumhydroxid | 2,65 | 5 min. |
| Emulgator | 8,80 | 5 min. |
| Calciumchloridlösung (25%ig) | 21,60 | 5 min. |
| Barite API 4.1 | 271,65 | 10 min. |
| gesamt | 500,00 | |

| | | |
|---|---|---|
| *Hamilton Beach Mixer Stufe 1 | | |

**Erklärung der Bewertungsskala**

| | | |
|---|---|---|
| Homogenität: | 1 | homogen |
| | 2 | leicht inhomogen |
| | 3 | inhomogen |
| | 4 | stark inhomogen |
| | 5 | völlig inhomogen |

**Ergebnisse:**

| **Produkt** | **Homogenität** |
|---|---|
| Nullprobe ohne Emulgator | 5 |
| Vergleich V1 | 5 |
| Vergleich V5 | 5 |
| Beispiel C12 | 1 |
| Beispiel C13 | 1 |
| Beispiel C2 | 1 |
| Beispiel C31 | 1 |

In der Tabelle ist erkennbar, dass in Gegenwart der erfindungsgemäßen Verträglichkeitsvermittler eine gute Stabilisierung der Emulsion im Bohrschlamm erzielt wird. In Abwesenheit eines Emulgators oder bei Verwendung der Vergleichsbeispiele erfolgte eine sofortige Koagulation des Bariumsulfats, so dass der Bohrschlamm technisch nicht mehr einsetzbar ist. Die erfindungsgemäßen Verträglichkeitsvermittler sind somit deutlich besser zur Herstellung und Stabilisierung eines Bohrschlamms geeignet als die Vergleichsbeispiele.

### Prüfsystem 7: Emulsion bestehend aus einem Erdöldestillat (LVT 200) und reinem Wasser

Zur Herstellung der Emulsion wird in einem 800 ml-Edelstahlbecher 111,8 g LVT 200 vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 80,0 g Wasser erfolgt eine weitere Homogenisierung 10 min auf Stufe 1.
Nach der Herstellung wird die hergestellte Emulsion in ein 250 ml-Schraubdeckelglas gefüllt und bei Raumtemperatur über Nacht gelagert. Anschließend erfolgt eine Bewertung der Emulsion analog zu der bei Prüfsystem 1 beschriebenen Methode.

**Formulierung der Emulsion:**

| | |
|---|---|
| LVT 200 | 111,8 g |
| Emulgator | 8,2 g |
| 5 min Hamilton Beach Mixer Stufe 1 | |
| VE-Wasser | 80,0 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 81 | 5 |
| Vergleich V4 | 49 | 4 |
| Vergleich V2 | 56 | 3-4 |
| Beispiel C20 | 12 | 2 |
| Beispiel C22 | 6 | 2 |
| Beispiel C23 | 3 | 1-2 |

In der Tabelle ist erkennbar, dass in Gegenwart der erfindungsgemäßen Verträglichkeitsvermittler eine deutlich bessere Stabilisierung der Emulsion erzielt wird als in Abwesenheit eines Emulgators oder bei Verwendung der Vergleichsbeispiele gemäß dem Stand der Technik. Die erfindungsgemäßen Verträglichkeitsvermittler zeigen somit deutlich bessere emulgierende Eigenschaften.

### Prüfsystem 8: Emulsion bestehend aus einem Erdöldestillat (LVT 200) und wässriger Natriumsulfat-Lösung

Zur Herstellung der Emulsion wird in einem 800 ml-Edelstahlbecher 111,8 g LVT 200 vorgelegt. Nach Zugabe von 8,2 g des jeweiligen Emulgators wird die Probe 5 min mit einem Hamilton Beach Mixer (Typ GM20 / Model HMD 200-CE) auf Stufe 1 homogenisiert. Nach Zugabe von 80,0 g Natriumsulfatlösung (15%-ig in Wasser) erfolgt eine weitere Homogenisierung 10 min auf Stufe 1.

Nach der Herstellung wird die hergestellte Emulsion in ein 250 ml-Schraubdeckelglas gefüllt und bei Raumtemperatur über Nacht gelagert. Anschließend erfolgt eine Bewertung der Emulsion analog zu der bei Prüfsystem 1 beschriebenen Methode.

**Formulierung der Emulsion:**

| | |
|---|---|
| LVT 200 | 111,8 g |
| Emulgator | 8,2 g |
| 5 min Hamilton Beach Mixer Stufe 1 | |
| Natriumsulfatlösung (15%-ig) | 80,0 g |
| 10 min. Hamilton Beach Mixer Stufe 1 | |
| | 200,0 g |

**Ergebnisse:**

| **Produkt** | **Separation %** | **Homogenität** |
|---|---|---|
| Nullprobe ohne Emulgator | 81 | 5 |
| Vergleich V4 | 54 | 3 |
| Vergleich V2 | 40 | 3 |
| Beispiel C20 | 3 | 1 |

In der Tabelle ist erkennbar, dass in Gegenwart des erfindungsgemäßen Verträglichkeitsvermittlers eine deutlich bessere Stabilisierung der Emulsion erzielt wird als in Abwesenheit eines Emulgators oder bei Verwendung der Vergleichsbeispiele nach dem Stand der Technik. Der erfindungsgemäße Verträglichkeitsvermittler zeigt somit deutlich bessere emulgierende Eigenschaften.

## Patentansprüche

1. Emulsion enthaltend oder bestehend aus
(A) 40,00 bis 97,98 Gew.-% mindestens eines Kohlenwasserstoffs,
(B) 2,00 bis 59,98 Gew.-% Wasser oder einer wässrigen Lösung eines Salzes, das nicht unter die folgende Definition gemäß (C) fällt und
(C) 0,02 bis 8,00 Gew.-% eines Salzes aus einem Aminoamid einer Fettsäure, das mindestens eine primäre, sekundäre oder tertiäre Aminogruppe enthält, und einer sauren Komponente der allgemeinen Formel (I) 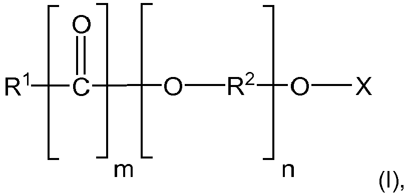 in der
R¹ ein linearer oder verzweigter, gesättigter oder einfach oder mehrfach ungesättigter Kohlenwasserstoffrest mit 1 bis 40 C-Atomen ist,
R² ein Alkylen- oder Arylalkylenrest mit 2 bis 20 C-Atomen ist, der in den n Wiederholungseinheiten gleich oder verschieden ist und maximal ein Ether-Sauerstoffatom enthält und
X ein Rest ist, der mindestens eine saure Gruppe enthält, die ausgewählt ist aus carbonsauren Gruppen, phosphonsauren Gruppen und phosphorsauren Gruppen,
m = 0 oder 1 ist,
n = 1 bis 30 ist,
wobei die Gewichtsanteile der Komponenten (A), (B) und (C) auf die Summe der Massen dieser Komponenten bezogen sind und diese 100 Gew.-% beträgt.

2. Emulsion nach Anspruch 1, **dadurch gekennzeichnet, dass** R¹ ein Alkyl- oder Alkenylrest mit 4 bis 24 C-Atomen ist.

3. Emulsion nach Anspruch 1 oder 2, **dadurch gekennzeichnet, dass** R¹ ein Alkyl- oder Alkenylrest mit 6 bis 20 C-Atomen und m=0 ist.

4. Emulsion nach Anspruch 1 bis 3, **dadurch gekennzeichnet, dass** R² ein Alkylenrest mit 2 bis 4 C-Atomen ist und nur Kohlenstoff und Wasserstoff enthält.

5. Emulsion nach Anspruch 1 bis 4, **dadurch gekennzeichnet, dass** der Rest X der allgemeinen Formel (II) 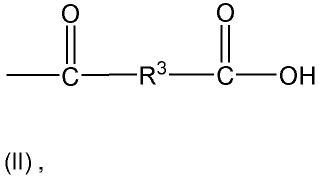 entspricht, in der R³ ein gesättigter oder ungesättigter zweibindiger Kohlenwasserstoffrest ist, oder der Rest X der allgemeinen Formel (III) 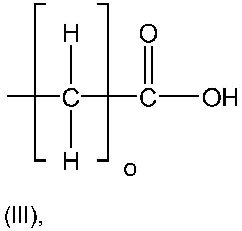 entspricht, in der o = 1 bis 6 ist.

6. Emulsion nach Anspruch 1 bis 5, **dadurch gekennzeichnet, dass** in der allgemeinen Formel (II) R³ für eine Gruppe ausgewählt aus -CH₂-CH₂-, -CH=CH- und einer Phenylengruppe steht,
oder in der allgemeinen Formel (III) o = 1 oder 2 ist.

7. Emulsion nach Anspruch 1 bis 6, **dadurch gekennzeichnet, dass** die saure Komponente herstellbar ist durch Umsetzung einer Fettsäure mit einem Polyalkylenglykol in einem molaren Verhältnis von 0,8:1 bis 1,2:1 zu einem Zwischenprodukt, das im Mittel pro Molekül eine Hydroxylgruppe aufweist, und weitere Umsetzung des Zwischenprodukts mit einer Dicarbonsäure oder einem Dicarbonsäureanhydrid zu einem sauren Halbester.

8. Emulsion nach Anspruch 1 bis 6, **dadurch gekennzeichnet, dass** die saure Komponente herstellbar ist durch Alkoxylierung eines Fettalkohols und anschließende Umsetzung der OH-Gruppen des erhaltenen Zwischenprodukts mit einem Reaktionspartner ausgewählt aus der Gruppe umfassend Carboxyalklierungsmittel, Phosphorylierungsmittel und Dicarbonsäuren bzw. Dicarbonsäureanhydride.

9. Emulsion nach Anspruch 1 bis 6 oder 8, **dadurch gekennzeichnet, dass** die saure Komponente herstellbar ist durch Alkoxylierung eines Fettalkohols mit Ethylenoxid und/oder Propylenoxid und anschließende Umsetzung der OH-Gruppen des erhaltenen Zwischenprodukts mit einem Reaktionspartner ausgewählt aus der Gruppe umfassend Chloressigsäure, Phosphorpentaoxid, Polyphosphorsäure, Maleinsäureanhydrid und Bernsteinsäureanhydrid.

10. Emulsion nach Anspruch 1 bis 9, **dadurch gekennzeichnet, dass** die basische Komponente ein Fettsäureaminoamid ist, welches herstellbar ist durch Umsetzung einer Fettsäure mit einem aliphatischen Polyamin mit mindestens zwei Aminogruppen.

11. Emulsion nach Anspruch 1 bis 10, **dadurch gekennzeichnet, dass** sie
(A) 69,5 bis 89,50 Gew.-% mindestens eines Kohlenwasserstoffs,
(B) 10,00 bis 30,00 Gew.-% Wasser oder einer wässrigen Salzlösung und
(C) 0,50 bis 5,00 Gew.-% eines Salzes eines Aminoamids einer Fettsäure und einer sauren Komponente der Formel (I) enthält, wobei die Gewichtsanteile der Komponenten (A), (B) und (C) auf die Summe der Massen dieser Komponenten bezogen sind und diese 100 Gew.-% beträgt.

12. Emulsion nach Anspruch 1 bis 11, **dadurch gekennzeichnet, dass** der Kohlenwasserstoff ausgewählt ist aus der Gruppe umfassend Kohlenwasserstoffe mit synthetischem, pflanzlichem, tierischem und petrochemischem Ursprung.

13. Emulsion nach Anspruch 1 bis 12, **dadurch gekennzeichnet, dass** die wässrige Salzlösung Wasser und Halogenide, Carbonate, Sulfate, Phosphate, Formiate, Acetate, Citrate, Lactate, Malate, Tartrate und/oder Hydroxide mindestens eines Alkali- oder Erdalkalimetalls oder Nebengruppenmetalls enthält.

14. Verfahren zur Herstellung einer Emulsion ausgewählt aus der Gruppe der Wasser-in-ÖI-Emulsionen und Öl-in-Wasser-Emulsionen nach Anspruch 1 bis 13, bei dem eine wässrige Komponente (B) und mindestens ein Kohlenwasserstoff (A) in Anwesenheit eines Salzes (C) unter Aufbringung von Scherenergie homogenisiert werden.

15. Ölbasierte Bohrflüssigkeit, enthaltend die Komponenten (A), (B) und (C) nach Anspruch 1 bis 13 und zusätzlich mindestens eine weitere Komponente ausgewählt aus der Gruppe der Rheologiesteuerungsmittel, Füllstoffe, anorganischen Thixotropiermittel, Beschwerungsmittel, Benetzungshilfsmittel, Rissheilmittel, Korrosionsschutzmittel und Zusatzstoffe zur Einstellung eines alkalischen Milieus.

16. Verfahren zur Erstellung und Stabilisierung eines Bohrlochs zur Vorbereitung und/oder Durchführung der Förderung von Erdöl und/oder Erdgas, bei dem eine Emulsion nach Anspruch 1 bis 13 oder eine ölbasierte Bohrflüssigkeit nach Anspruch 15 verwendet wird.

## Claims

1. Emulsion containing or consisting of
(A) 40.00 to 97.98 wt.% of at least one hydrocarbon,
(B) 2.00 to 59.98 wt.% of water or an aqueous solution of a salt which does not fall under the following definition according to (C) and
(C) 0.02 to 8.00 wt.% of a salt of an amino amide of a fatty acid, containing at least one primary, secondary or tertiary amino group, and an acid component of general formula (I) 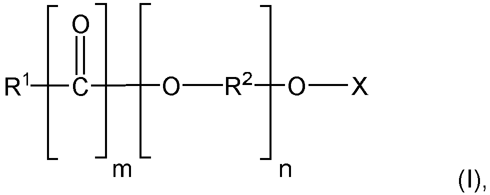 in which
R¹ is a linear or branched, saturated or mono-unsaturated or polyunsaturated hydrocarbon radical with 1 to 40 C atoms,
R² is an alkylene radical or arylalkylene radical with 2 to 20 C atoms, which is the same or different in the n repeating units and contains maximum one ether oxygen atom and
X is a radical which contains at least one acid group which is selected from carboxylic acid groups, phosphonic acid groups and phosphoric acid groups,
m = 0 or 1,
n = 1 to 30,
wherein the weight proportions of components (A), (B) and (C) relate to the sum of the masses of these components and this is 100 wt.%.

2. Emulsion according to Claim 1, **characterized in that** R¹ is an alkyl radical or alkenyl radical with 4 to 24 C atoms.

3. Emulsion according to Claim 1 or 2, **characterized in that** R¹ is an alkyl radical or alkenyl radical with 6 to 20 C atoms and m=0.

4. Emulsion according to Claim 1 to 3, **characterized in that** R² is an alkylene radical with 2 to 4 C atoms and contains only carbon and hydrogen.

5. Emulsion according to Claim 1 to 4, **characterized in that** the radical X corresponds to general formula (II) 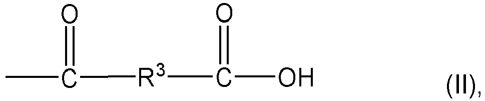 in which R³ is a saturated or unsaturated divalent hydrocarbon radical, or the radical X corresponds to general formula (III) 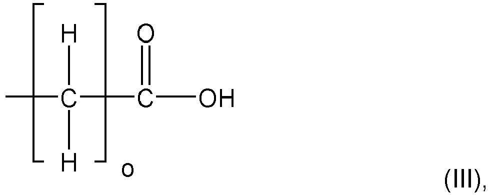 in which o = 1 to 6.

6. Emulsion according to Claim 1 to 5, **characterized in that** in general formula (II) R³ represents a group selected from -CH₂-CH₂-, -CH=CH- and a phenylene group,
or in general formula (III) o = 1 or 2.

7. Emulsion according to Claim 1 to 6, **characterized in that** the acid component can be produced by reacting a fatty acid with a polyalkylene glycol in a molar ratio of 0.8:1 to 1.2:1 to form an intermediate product which has on average one hydroxyl group per molecule, and further reaction of the intermediate product with a dicarboxylic acid or a dicarboxylic acid anhydride to form an acid half-ester.

8. Emulsion according to Claim 1 to 6, **characterized in that** the acid component can be produced by alkoxylation of a fatty alcohol and subsequent reaction of the OH groups of the intermediate product obtained with a reactant selected from the group comprising carboxyalkylating agents, phosphorylating agents and dicarboxylic acids or dicarboxylic acid anhydrides.

9. Emulsion according to Claim 1 to 6 or 8, **characterized in that** the acid component can be produced by alkoxylation of a fatty alcohol with ethylene oxide and/or propylene oxide and subsequent reaction of the OH groups of the intermediate product obtained with a reactant selected from the group comprising chloroacetic acid, phosphorus pentoxide, polyphosphoric acid, maleic anhydride and succinic anhydride.

10. Emulsion according to Claim 1 to 9, **characterized in that** the basic component is a fatty acid amino amide which can be produced by reacting a fatty acid with an aliphatic polyamine having at least 2 amino groups.

11. Emulsion according to Claim 1 to 10, **characterized in that** it contains
(A) 69.5 to 89.50 wt.% of at least one hydrocarbon,
(B) 10.00 to 30.00 wt.% of water or an aqueous salt solution and
(C) 0.50 to 5.00 wt.% of a salt of an amino amide of a fatty acid and an acid component of formula (I), wherein the weight proportions of components (A), (B) and (C) relate to the sum of the masses of these components and this is 100 wt.%.

12. Emulsion according to Claim 1 to 11, **characterized in that** the hydrocarbon is selected from the group comprising hydrocarbons of synthetic, vegetable, animal and petrochemical origin.

13. Emulsion according to Claim 1 to 12, **characterized in that** the aqueous salt solution contains water and halides, carbonates, sulfates, phosphates, formates, acetates, citrates, lactates, malates, tartrates and/or hydroxides of at least one alkali metal or alkaline earth metal or sub-group metal.

14. Method for the production of an emulsion selected from the group of water-in-oil emulsions and oil-in-water emulsions according to Claim 1 to 13, in which an aqueous component (B) and at least one hydrocarbon (A) are homogenized in the presence of a salt (C) with application of shear energy.

15. Oil-based drilling mud containing components (A), (B) and (C) according to Claim 1 to 13 and additionally at least one further component selected from the group of rheology-control agents, fillers, inorganic thixotropic agents, weighting agents, wetting auxiliaries, crack-remedying agents, corrosion-protection agents and additives for setting an alkaline medium.

16. Method for creating and stabilizing a drill hole for the preparation and/or carrying out of recovery of petroleum and/or natural gas, in which an emulsion according to Claim 1 to 13 or an oil-based drilling mud according to Claim 15 is used.

## Revendications

1. Émulsion contenant ou étant constituée de
(A) 40,00 à 97,98 % en poids d'au moins un hydrocarbure,
(B) 2,00 à 59,98 % en poids d'eau ou d'une solution aqueuse d'un sel, qui ne correspond pas à la définition suivante selon (C) et
(C) 0,02 à 8,00 % en poids d'un sel d'un aminoamide d'un acide gras, qui contient au moins un groupe amino primaire, amino secondaire ou amino tertiaire, et un composant acide de formule générale (I) 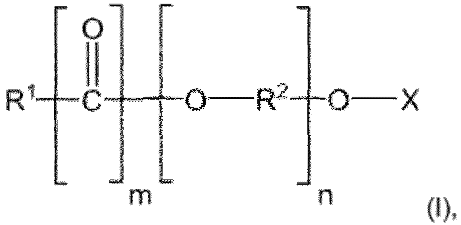 dans laquelle
R¹ est un radical hydrocarboné linéaire ou ramifié, saturé ou insaturé une ou plusieurs fois comportant 1 à 40 atome(s) de C,
R² est un radical alkylène ou arylalkylène comportant 2 à 20 atomes de C, qui est identique ou différent dans les n motifs répétitifs et qui contient au maximum un atome d'oxygène d'éther et
X est un radical, qui contient au moins un groupe acide, qui est choisi parmi des groupes acide carboxylique, des groupes acide phosphonique et des groupes acide phosphorique,
m = 0 ou 1,
n = 1 à 30,
les parties en poids des composants (A), (B) et (C) se rapportant à la somme des masses de ces composants et celle-ci étant de 100 % en poids.

2. Émulsion selon la revendication 1, **caractérisée en ce que** R¹ est un radical alkyle ou alcényle comportant 4 à 24 atomes de C.

3. Émulsion selon la revendication 1 ou 2, **caractérisée en ce que** R¹ est un radical alkyle ou alcényle comportant 6 à 20 atomes de C et m = 0.

4. Émulsion selon les revendications 1 à 3, **caractérisée en ce que** R² est un radical alkylène comportant 2 à 4 atomes de C et contient seulement du carbone et de l'hydrogène.

5. Émulsion selon les revendications 1 à 4, **caractérisée en ce que** le radical X correspond à la formule générale (II) 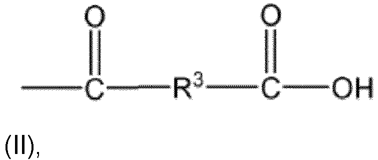 dans laquelle R³ est un radical hydrocarboné divalent saturé ou insaturé, ou le radical X correspond à la formule générale (III) 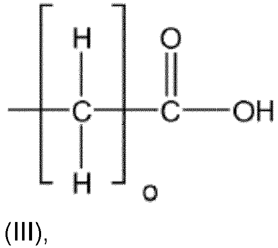 dans laquelle o = 1 à 6.

6. Émulsion selon les revendications 1 à 5, **caractérisée en ce que**, dans la formule générale (II), R³ représente un groupe choisi parmi -CH₂-CH₂-, -CH=CH- et un groupe phénylène,
ou dans la formule générale (III), o = 1 ou 2.

7. Émulsion selon les revendications 1 à 6, **caractérisée en ce que** le composant acide peut être préparé par transformation d'un acide gras avec un polyalkylèneglycol en un rapport molaire de 0,8:1 à 1,2:1 en un produit intermédiaire, qui présente en moyenne un groupe hydroxyle par molécule, et par transformation ultérieure du produit intermédiaire avec un acide dicarboxylique ou un anhydride d'acide dicarboxylique en un hémi-ester acide.

8. Émulsion selon les revendications 1 à 6, **caractérisée en ce que** le composant acide peut être préparé par alcoxylation d'un alcool gras et par transformation ultérieure des groupes OH du produit intermédiaire obtenu avec un partenaire de réaction choisi dans le groupe comprenant un agent de carboxyalkylation, un agent de phosphorylation et des acides dicarboxyliques ou, selon le cas, des anhydrides d'acide dicarboxylique.

9. Émulsion selon les revendications 1 à 6 ou 8, **caractérisée en ce que** le composant acide peut être préparé par alcoxylation d'un alcool gras avec de l'oxyde d'éthylène et/ou de l'oxyde de propylène et par transformation ultérieure des groupes OH du produit intermédiaire obtenu avec un partenaire de réaction choisi dans le groupe comprenant l'acide chloroacétique, le pentoxyde de phosphore, l'acide polyphosphorique, l'anhydride maléique et l'anhydride succinique.

10. Émulsion selon les revendications 1 à 9, **caractérisée en ce que** le composant basique est un aminoamide d'acide gras, qui peut être préparé par transformation d'un acide gras avec une polyamine aliphatique comportant au moins deux groupes amino.

11. Émulsion selon les revendications 1 à 10, **caractérisée en ce qu'**elle contient
(A) 69,5 à 89,50 % en poids d'au moins un hydrocarbure,
(B) 10,00 à 30,00 % en poids d'eau ou d'une solution aqueuse de sel et
(C) 0,50 à 5,00 % en poids d'un sel d'un aminoamide d'un acide gras et un composant acide de formule (I), les parties en poids des composants (A), (B) et (C) se rapportant à la somme des masses de ces composants et celle-ci étant de 100 % en poids.

12. Émulsion selon les revendications 1 à 11, **caractérisée en ce que** l'hydrocarbure est choisi dans le groupe comprenant des hydrocarbures d'origine synthétique, végétale, animale et pétrochimique.

13. Émulsion selon les revendications 1 à 12, **caractérisé en ce que** la solution aqueuse de sel contient de l'eau et des halogénures, des carbonates, des sulfates, des phosphates, des formiates, des acétates, des citrates, des lactates, des malates, des tartrates et/ou des hydroxydes d'au moins un métal alcalin ou d'au moins un métal alcalino-terreux ou d'au moins un métal des groupes secondaires.

14. Procédé pour la préparation d'une émulsion choisie dans le groupe des émulsions eau-dans-huile et des émulsions huile-dans-eau selon les revendications 1 à 13, dans lequel un composant aqueux (B) et au moins un hydrocarbure (A) sont homogénéisés en présence d'un sel (C) avec application d'énergie de cisaillement.

15. Fluide de forage à base d'huile, contenant les composants (A), (B) et (C) selon les revendications 1 à 13 et de plus au moins un composant supplémentaire choisi dans le groupe des agents de régulation de la rhéologie, des charges, des agents thixotropes inorganiques, des agents de lestage, des agents de mouillage, des agents de traitement des fissures, des agents de protection contre la corrosion et des additifs pour l'ajustement d'un milieu alcalin.

16. Procédé pour l'élaboration et la stabilisation d'un puits de forage pour la préparation et/ou la réalisation de l'extraction de pétrole et/ou de gaz naturel, dans lequel une émulsion selon les revendications 1 à 13 ou un fluide de forage à base d'huile selon la revendication 15 est utilisé(e).
